# EUROPEAN PATENT APPLICATION

(11) **EP 4 852 363 A1**
(43) Date of publication of application: **09.12.2026**
(21) Application number: 25749019.3
(22) Date of filing: 24.01.2025
(51) Int. Cl.: H04L 5/00, H04L 1/08, H04W 72/0453, H04W 72/1268, H04W 84/06, H04L 27/26, H04W 52/04

(54) **METHOD AND APPARATUS FOR PERFORMING COMMUNICATION IN WIRELESS COMMUNICATION SYSTEM**

(30) Priority: 29.01.2024 KR 20240013516; 21.02.2024 KR 20240025345
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Plasseraud IP
(86) International application number: PCT/KR2025/001478
(87) International publication number: WO 2025/165116

(57) **Abstract**

Provided are a method by which a device performs wireless communication and an apparatus supporting same. The method may comprise the steps of: acquiring information related to an orthogonal cover code; and performing a plurality of uplink shared channel repetitions on the basis of the orthogonal cover code. For example, on the basis that the number of the plurality of uplink shared channel repetitions is not a multiple of the length of the orthogonal cover code, the orthogonal cover code can be applied to a first uplink shared channel repetition, which can be divided by the multiple of the length of the orthogonal cover code, from among the plurality of uplink shared channel repetitions.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment of the present disclosure, a method may be provided. For example, the method may include: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a device may be provided. For example, the device may include: at least one transceiver; at least one processor; and at least one memory connected to the at least one processor and storing instructions. For example, the instructions, based on being executed by the at least one processor, may cause the device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a processing device adapted to control a device may be provided. For example, the processing device may include: at least one processor; and at least one memory connected to the at least one processor and storing instructions. For example, the instructions, based on being executed by the at least one processor, may cause the device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a non-transitory computer-readable storage medium storing instructions may be provided. For example, the instructions, when executed, may cause a device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a method may be provided. For example, the method may include: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a base station may be provided. For example, the base station may include: at least one transceiver; at least one processor; and at least one memory connected to the at least one processor and storing instructions. For example, the instructions, based on being executed by the at least one processor, may cause the base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a processing device adapted to control a base station may be provided. For example, the processing device may include: at least one processor; and at least one memory connected to the at least one processor and storing instructions. For example, the instructions, based on being executed by the at least one processor, may cause the base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a non-transitory computer-readable storage medium storing instructions may be provided. For example, the instructions, when executed, may cause a base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIG. 8 shows a procedure for uplink transmission and reception, based on an embodiment of the present disclosure.
FIG. 9 shows an example of OCC with PUSCH repetition Type A, based on an embodiment of the present disclosure.
FIG. 10 shows an example of an OCC applied to PUSCH repetitions according to an embodiment of the present disclosure.
FIG. 11 shows an example of an OCC applied to PUSCH repetitions according to an embodiment of the present disclosure.
FIG. 12 shows an example of an OCC applied to PUSCH repetitions according to an embodiment of the present disclosure.
FIG. 13 shows an example of an OCC applied to PUSCH repetitions according to an embodiment of the present disclosure.
FIG. 14 shows an example of an OCC applied to PUSCH repetitions according to an embodiment of the present disclosure.
FIG. 15 shows a method for a device to perform wireless communication, based on an embodiment of the present disclosure.
FIG. 16 shows a method for a base station to perform wireless communication, based on an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

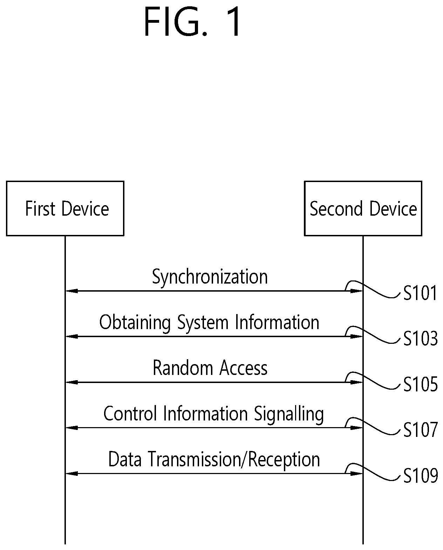

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

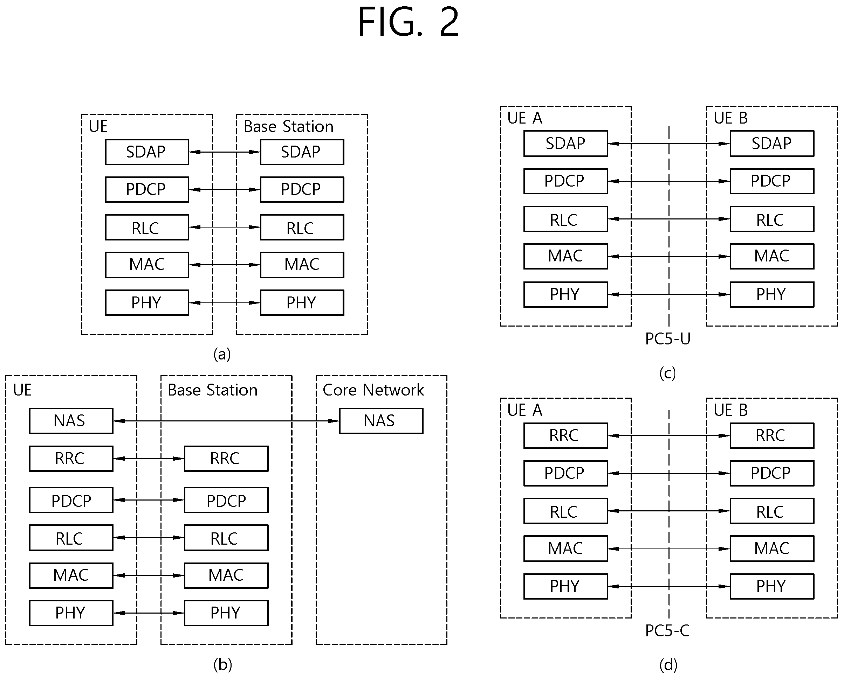

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, e.g., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

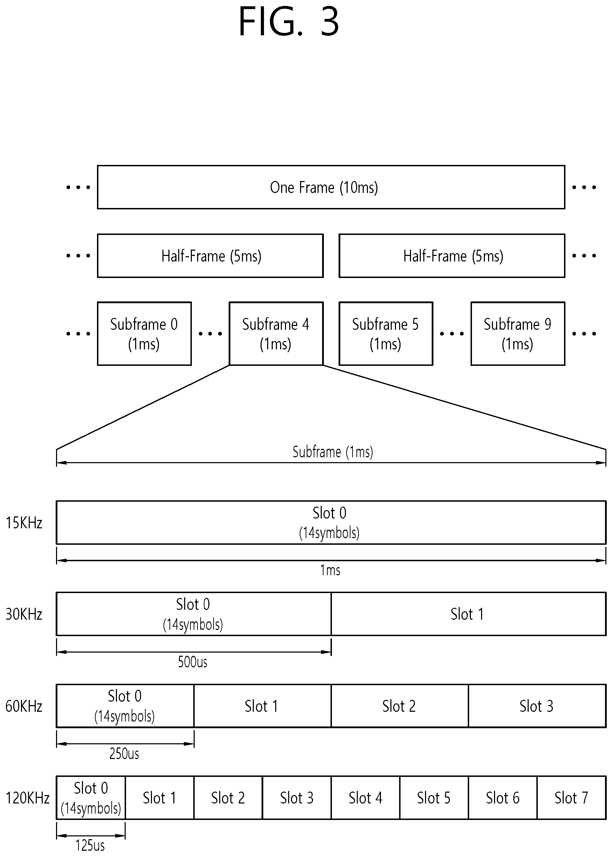

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

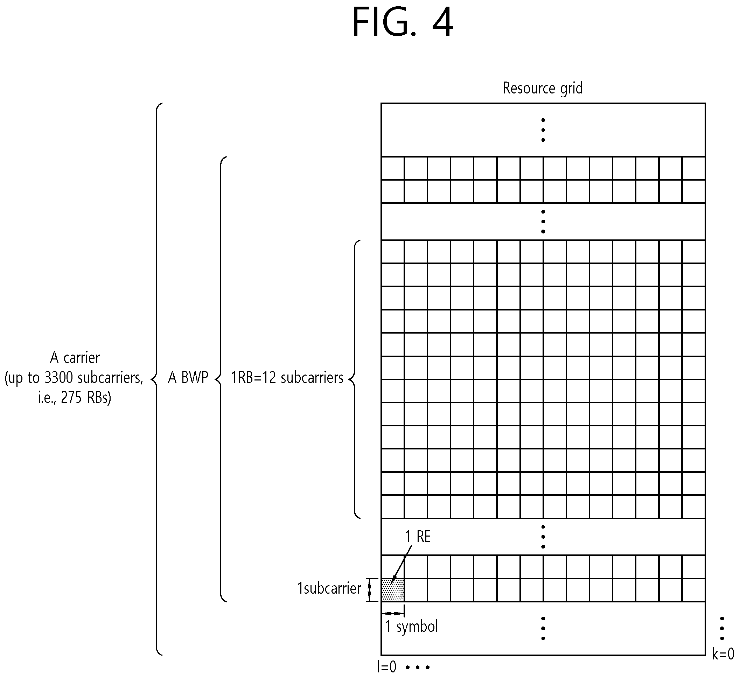

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

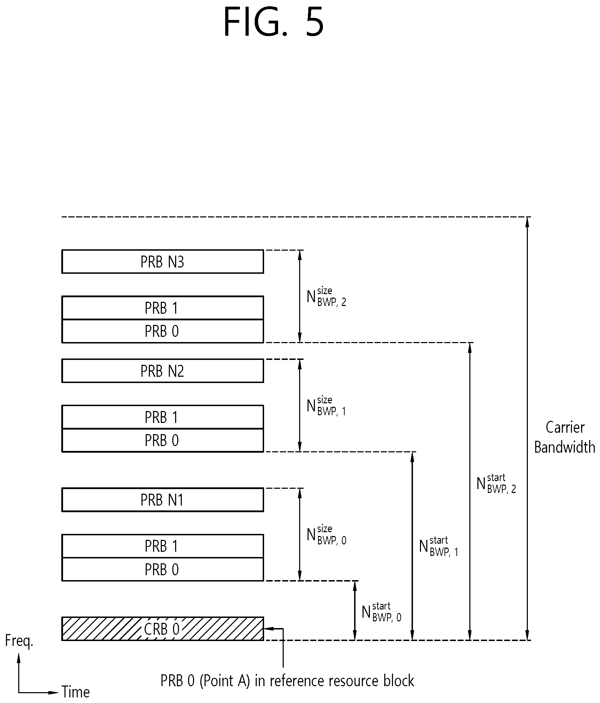

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

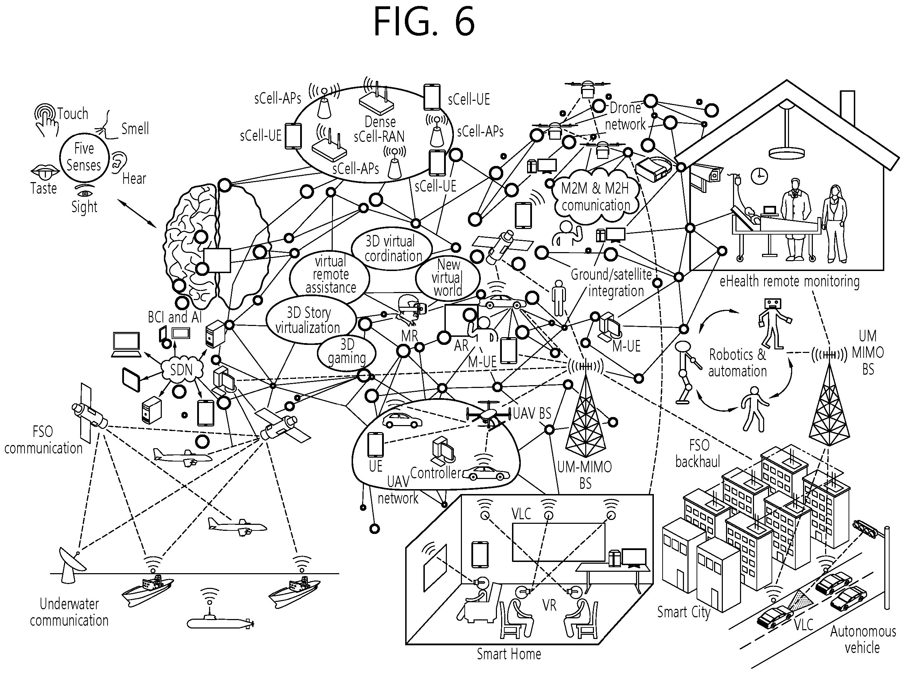

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operations consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

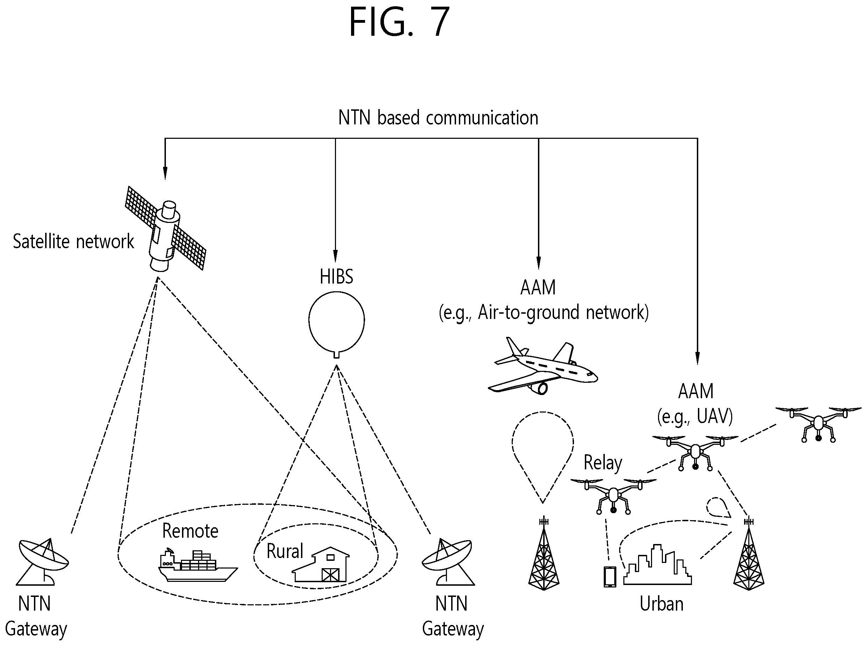

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

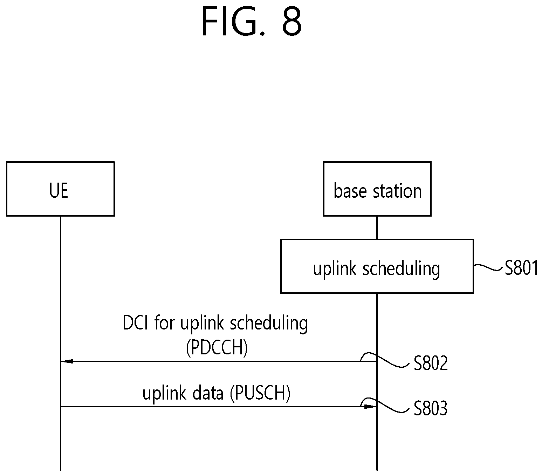

FIG. 8 shows a procedure for uplink transmission and reception, based on an embodiment of the present disclosure. The embodiment of FIG. 8 may be combined with various embodiments of the present disclosure.

Referring to FIG. 8, for example, in step S801, a base station may schedule an uplink transmission, such as a frequency/time resource, a transmission layer, an uplink precoder, an MCS, and the like. For example, the base station may determine a beam for a PUSCH transmission of a UE through the operations described above.

For example, in step S802, the UE may receive, from the base station, DCI for uplink scheduling (e.g., including scheduling information for a PUSCH) on a PDCCH.

For example, DCI format 0_0 or 0_1 may be used for uplink scheduling, and particularly, DCI format 0_1 may include the following information: DCI format identifier (Identifier for DCI formats), UL/SUL (Supplementary uplink) indicator (UL/SUL indicator), bandwidth part indicator (Bandwidth part indicator), frequency domain resource assignment (Frequency domain resource assignment), time domain resource assignment (Time domain resource assignment), frequency hopping flag (Frequency hopping flag), modulation and coding scheme (MCS: Modulation and coding scheme), SRS resource indicator (SRI: SRS resource indicator), precoding information and number of layers (Precoding information and number of layers), antenna port(s) (Antenna port(s)), SRS request (SRS request), DMRS sequence initialization (DMRS sequence initialization), and UL-SCH indicator (UL-SCH indicator).

For example, SRS resources configured within an SRS resource set related to the higher-layer parameter 'usage' may be indicated by an SRS resource indicator field. For example, 'spatialRelationInfo' may be configured for each SRS resource, and the value thereof may be one of {CRI, SSB, SRI}.

For example, in step S803, the UE may transmit uplink data to the base station on a PUSCH.

For example, when the UE detects a PDCCH including DCI format 0_0 or 0_1, the UE may transmit the corresponding PUSCH according to an indication by the corresponding DCI.

For example, two transmission schemes (e.g., a codebook-based transmission for a PUSCH transmission and a non-codebook-based transmission for a PUSCH transmission) may be supported:
i) For example, when the higher-layer parameter 'txConfig' is set to 'codebook', the UE may be configured for a codebook-based transmission. For example, when the higher-layer parameter 'txConfig' is set to 'nonCodebook', the UE may be configured for a non-codebook-based transmission. For example, when the higher-layer parameter 'txConfig' is not configured, the UE may not expect scheduling by DCI format 0_1. For example, when a PUSCH is scheduled by DCI format 0_0, the PUSCH transmission may be based on a single antenna port.
   For example, in the case of a codebook-based transmission, a PUSCH may be scheduled by DCI format 0_0, DCI format 0_1, or semi-static scheduling. For example, when the PUSCH is scheduled by DCI format 0_1, the UE may determine a PUSCH transmission precoder based on an SRI, a TPMI (Transmit Precoding Matrix Indicator), and a transmission rank from the DCI, as given by the SRS resource indicator field and the precoding information and number of layers field. For example, the TPMI may be used to indicate a precoder to be applied across antenna ports, and may correspond to an SRS resource selected by the SRI when multiple SRS resources are configured. For example, when a single SRS resource is configured, the TPMI may be used to indicate a precoder to be applied across antenna ports and may correspond to the single SRS resource. For example, a transmission precoder may be selected from an uplink codebook having the same number of antenna ports as the higher-layer parameter 'nrofSRS-Ports'. For example, when the UE is configured with the higher-layer parameter 'txConfig' set to 'codebook', at least one SRS resource may be configured. For example, an SRI indicated in slot n is related to the most recent transmission of the SRS resource identified by the SRI, wherein the SRS resource may precede the PDCCH carrying the SRI (e.g., in slot n).
ii) For example, in the case of a non-codebook-based transmission, a PUSCH may be scheduled by DCI format 0_0, DCI format 0_1, or semi-static scheduling. For example, when multiple SRS resources are configured, the UE may determine a PUSCH precoder and a transmission rank based on a wideband SRI, wherein the SRI may be given by the SRS resource indicator in DCI or by the higher-layer parameter 'srs-ResourceIndicator'. For example, the UE may use one or multiple SRS resources for SRS transmission, wherein the number of SRS resources may be configured for simultaneous transmission within the same RB based on a UE capability. For example, only one SRS port may be configured for each SRS resource. For example, only one SRS resource may be configured with the higher-layer parameter 'usage' set to 'nonCodebook'. For example, the maximum number of SRS resources that may be configured for a non-codebook-based uplink transmission may be 4. For example, an SRI indicated in slot n is related to the most recent transmission of the SRS resource identified by the SRI, wherein the SRS transmission may precede the PDCCH carrying the SRI (e.g., in slot n).

For example, an orthogonal cover code (OCC) across PUSCH repetition(s) may be disclosed.

For example, in the case of OCC across PUSCH repetition(s), the following two directions may be considered:
- For example, Option 1: OCC with PUSCH repetition Type A
- For example, Option 2: OCC with PUSCH repetition Type B

For example, OCC across PUSCH repetition(s) may be an integrated solution that can be applied to both IoT NTN and NR NTN, and may be a study direction to reduce specification work. However, the feasibility of applying OCC should be studied considering impairments such as time/frequency shift and phase distortion in GSO/NGSO environment.

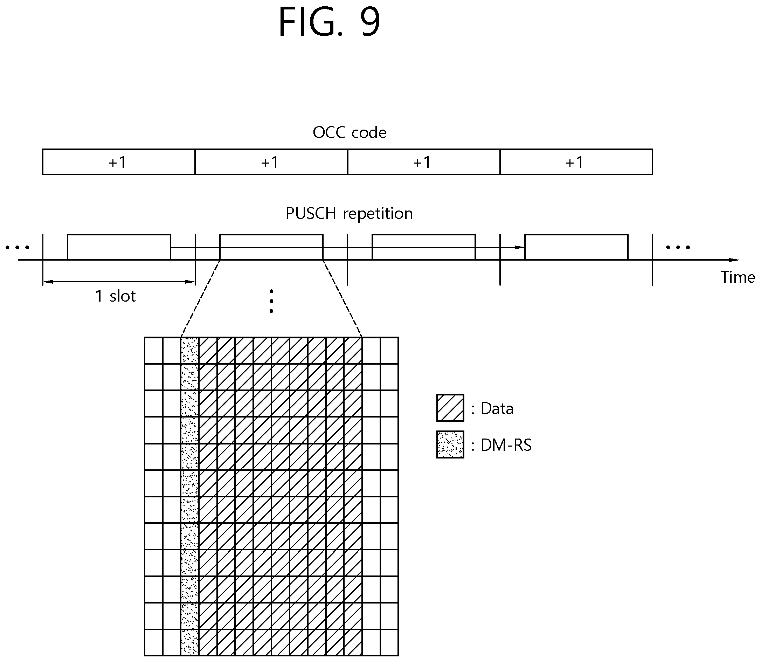

FIG. 9 shows an example of OCC with PUSCH repetition Type A, based on an embodiment of the present disclosure. The embodiment of FIG. 9 may be combined with various embodiments of the present disclosure.

Referring to FIG.9, for example, OCC with PUSCH repetition Type A (Option 1) may be a scheme of applying OCC between PUSCH repetition(s) where PUSCH is repeated on a slot basis. For example, a PUSCH allocated within one slot may be repeatedly transmitted for a plurality of slots, and OCC may be applied across PUSCH repetition(s). For example, in order to apply OCC between slots, the feasibility of maintaining orthogonality of OCC may need to be considered. For example, during the period where OCC is applied, gNB may expect UE to maintain phase continuity and/or power consistency of PUSCH transmission. For example, this may be supported by reusing the capabilities of DM-RS bundling introduced in UL coverage enhancement (e.g., nominal/actual TDW) or defining new UE capabilities. For example, in NR-NTN, UE may be expected to apply pre-compensation for delay/Doppler during uplink transmission, and the pre-compensation process may depend on UE implementation. For example, in order to ensure the orthogonality of OCC, discussion on the pre-compensation requirements for OCC may be necessary. For example, when an NTN UE reports OCC support capability, delay/Doppler pre-compensation capability within a certain level may be required as a prerequisite for the OCC capability.

For example, for OCC with PUSCH repetition Type A (Option 1), OCC orthogonality may not be guaranteed without pre-requisites such as phase continuity, power consistency, delay/Doppler pre-compensation, etc.

For example, for Option 1, some operations of PUSCH repetition Type A may need to be changed. For example, in PUSCH Repetition Type A, when PUSCH is repeated over slots, redundancy version (RV) cycling over PUSCH repetition(s) may be applied. For example, for Option 1, the same signal may need to be repeated for applying OCC, so RV may need to be fixed between repeated transmissions. For example, if the OCC across PUSCH repetition(s) is also applied to the DM-RS sequence within the PUSCH, the DM-RS sequence may need to remain the same between PUSCH repetition(s). For example, according to current specification, PUSCH DM-RS sequence has an initial value which depends on slot index, but when OCC is applied, the initial value for PUSCH DM-RS sequence within repeated transmission may be fixed to the same value.

For example, for OCC with PUSCH repetition Type A (Option 1), changes in RV and/or PUSCH DM-RS sequences through slots may not be suitable for OCC application.

For example, in Rel-17, support of PUSCH repetition Type A for Msg3 PUSCH was also introduced. For example, when discussing the application of OCC to PUSCH Repetition Type A, it may be discussed whether applying OCC for Msg3 PUSCH is in the study scope. For example, in the case of Msg3 PUSCH, uplink capacity/throughput may be reduced up to 1/16 with the maximum repetition number of 16. For example, if OCC is not applied for Msg3 PUSCH case, a significant latency may occur during initial access of NTN UE. For example, for Msg3 PUSCH, OCC resources may be linked to RA preamble resources.

For example, For OCC with PUSCH repetition Type A (Option 1), the enhancement may be also applied to Msg3 PUSCH with repetition(s).

For example, in Rel-19 NR NTN, study OCC with PUSCH repetition Type A considering the following aspects:
- For example, phase continuity and/or power consistency
- For example, Time/Frequency shift pre-compensation
- For example, redundancy version (RV) cycling
- For example, DM-RS sequence initialization
- For example, Msg3 PUSCH enhancement

For example, in the field of communications, introduction of a non-terrestrial network (NTN) utilizing a satellite or the like as a network node has been actively discussed recently. For example, a satellite supporting the NTN may be classified according to an orbit and characteristics of the satellite, such as GEO, MEO, and LEO, and may generally have a characteristic of a very high altitude. For example, a service area of the satellite may have a very wide coverage characteristic, and the number of target UEs within the service area may be relatively large. For example, the NTN service may require support of multiplexing for a plurality of UEs. For example, since a terrestrial UE has a limitation on transmission power, a coverage enhancement technique may be applied in order to allow a signal of a sufficient magnitude to reach a high-altitude NTN during uplink transmission. For example, the UE may achieve coverage enhancement by repeating a physical uplink shared channel (PUSCH), which is an uplink data channel, on a time domain. For example, the UE may transmit the PUSCH using a discrete fourier transform spread orthogonal frequency division multiplexing (DFT-s-OFDM) scheme for a coverage gain. For example, the DFT-s-OFDM modulation scheme may refer to a modulation scheme in which DFT precoding (or DFT spreading) is applied as part of transform (TF) precoding before an OFDM modulation scheme. For example, the coverage enhancement technique may suffer from reduced resource utilization efficiency due to repeated transmissions, and an uplink multiplexing scheme utilizing an orthogonal cover code (OCC) may be effective. For example, hereinafter, the present disclosure may propose a scheme for achieving capacity enhancement and/or multiplexing of an uplink data channel by utilizing an OCC when performing uplink repeated transmission.

For example, proposed method #01 may be proposed.

For example, according to proposed method #01, when a UE can apply an OCC to transmission resources of an uplink data channel (e.g., a PUSCH), a method in which the UE determines a size of an OCC application unit according to one or more of the following methods may be proposed.
(1) For example, a method in which a base station configures/instructs the size may be proposed.
(2) For example, a method in which the UE determines the size of the OCC application unit based on a value obtained by dividing (entire) transmission resources (to which the OCC is to be applied) by an OCC length (or a ceiling, a floor, or a rounded value of the divided value) may be proposed.

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, the base station may configure and/or instruct a specific value as the OCC length, or may configure and/or instruct a plurality of values, and the UE may select and apply one of the plurality of values. For example, the OCC length may be a value selected by the UE according to a (pre-)agreed/defined method.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). For example, in this case, the OCC application unit may be N RBs. For example, the OCC application unit for the uplink data channel may be a value configured and/or instructed to the UE by the base station. For example, when the configured/instructed OCC application unit is applied, there may be an advantage in that OCC-based (partial) multiplexing may be supported per OCC application unit even when transmission resources between respective channels do not completely coincide when multiplexing uplink data channels between a plurality of UEs. For example, as another method, a method may also be considered in which an OCC length is given and the UE determines the size of the OCC application unit based on a value obtained by dividing the entire transmission resources by the OCC length (or a ceiling, a floor, or a rounded value of the divided value). For example, the base station may configure and/or instruct a specific value as the OCC length, or may configure and/or instruct a plurality of values, and the UE may select and apply one of the plurality of values. For example, the OCC length may be a value selected by the UE according to a (pre-)agreed/defined method. For example, when a total of 12 RBs are allocated and the OCC length is given as 4, the size of the OCC application unit may be determined as 12/4 = 3 RBs. For example, when the size of the OCC application unit determined by the UE is applied, the OCC may be uniformly applied within the entire transmission resources. For example, characteristically, when the OCC is applied before DFT precoding, a resource domain before DFT precoding corresponds to a resource domain in which time-domain samples to be transmitted in one OFDM symbol are downsampled, and equally dividing the transmission resource domain into N equal portions and applying the OCC may have an effect similar to equally dividing a (downsampled) signal (within one OFDM symbol) into N equal portions (in the time domain) and applying the OCC. For example, during actual transmission after IFFT application, the form of the OCC may not be completely maintained due to an upsampling effect. For example, according to the proposed method of the present disclosure, there may be an advantage in that the size of the OCC application unit for applying the OCC to an uplink data channel (e.g., a PUSCH), for which resource allocation may vary, may be clarified between the base station and the UE.

For example, proposed method #01 may be applied in combination with other proposed method(s) within a range in which operations of the present disclosure do not conflict.

For example, proposed method #02 may be proposed.

For example, according to proposed method #02, when a UE can apply an OCC to (transmission) resources of an uplink data channel (e.g., a PUSCH), a method may be proposed in which the UE expects a size of (entire) (transmission) resources (to which the OCC is to be applied) for the uplink data channel to be a multiple of an OCC length and/or an OCC application unit (or a product of the OCC length and the OCC application unit).

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, when the UE receives a scheduling configuration/instruction different from an expectation, the UE may not transmit the corresponding uplink data channel.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). For example, in this case, the OCC application unit may be N RBs. For example, when it is allowed that a size of transmission resources allocated for the uplink data channel is not a multiple of an OCC length and/or an OCC application unit (or a product of the OCC length and the OCC application unit), resources to which the OCC is not applied may occur. For example, when there are a total of 10 RBs, the OCC length is 4, and the size of the OCC application unit is 2 RBs, the total number of RBs to which the OCC may be applied is 4 x 2 = 8 RBs, but the number of actually allocated RBs is 10, and thus application of the OCC to two RBs may be ambiguous. For example, accordingly, the present disclosure may propose a method in which, when the UE may apply the OCC to transmission resources of the uplink data channel (e.g., the PUSCH), the UE expects a resource allocation size for the uplink data channel to be a multiple of the OCC length and/or the OCC application unit (or the product of the OCC length and the OCC application unit), and omits transmission of the corresponding uplink data channel when scheduling different from the expectation is configured/instructed from the base station. For example, according to the proposed method of the present disclosure, there may be an advantage in that scheduling restrictions under which OCC application is possible may be mutually clarified between the base station and the UE by defining that the UE expects to receive a resource allocation corresponding to a multiple of the OCC length and/or the OCC application unit (e.g., or the product of the OCC length and the OCC application unit).

For example, proposed method #02 may be applied in combination with other proposed method(s) within a range in which operations of the present disclosure do not conflict.

When it is allowed that a size of transmission resources allocated for an uplink data channel is not a multiple of an OCC length and/or an OCC application unit (or a product of the OCC length and the OCC application unit), resources to which the OCC is not applied may occur.

For example, proposed method #03 may be proposed.

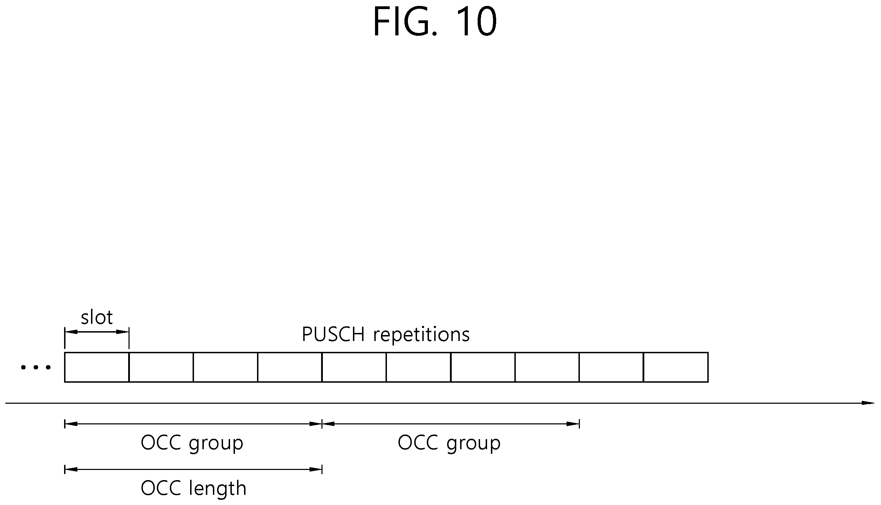

FIG. 10 shows an example of an OCC applied to PUSCH repetitions according to an embodiment of the present disclosure. The embodiment of FIG. 10 may be combined with various embodiments of the present disclosure.

Referring to FIG. 10, for example, PUSCH repetition may be performed. For example, the PUSCH repetition may be related to PUSCH repetition Type A. For example, in PUSCH repetition Type A, a PUSCH may be repeated in units of slots. For example, one PUSCH repetition may be one slot.

For example, an OCC with PUSCH repetition Type A may be a method of applying the OCC between PUSCH repetition(s) in which a PUSCH is repeated in units of slots. For example, a PUSCH allocated to one slot may be repeatedly transmitted over a plurality of slots, and the OCC may be applied across the PUSCH repetition(s).

For example, there may be an OCC group related to an OCC length. For example, the OCC length may be 2 or 4. For example, the OCC length may be 2. For example, the OCC length may not be limited to 2 or 4. For example, a number of OCC groups may be greater than or equal to one. For example, the number of OCC groups may be 2.

For example, according to proposed method #03, when a UE can apply an OCC to (transmission) resources of an uplink data channel (e.g., a PUSCH), a method may be proposed in which the UE performs one or more of the following (exception handling) operations when a size of (entire) (transmission) resources (to which the OCC is to be applied) is not a multiple of an OCC length (or a product of an OCC application unit and the OCC length).
(1) For example, transmission of the (corresponding) uplink data channel may be omitted.
(2) For example, the (entire) OCC may not be applied to the (corresponding) uplink data channel.
(3) For example, after resources are added such that the resources are a multiple of an OCC length (or a product of an OCC application unit and the OCC length), the OCC may be applied to the entire resources (including the added resources).
(4) For example, transmission of remaining resources that are not divisible by an OCC length (or a product of an OCC application unit and the OCC length) may be omitted.
(5) For example, the OCC may not be applied/may be partially applied to remaining resources that are not divisible by an OCC length (or a product of an OCC application unit and the OCC length).
(6) For example, an OCC having a short length may be applied to remaining resources that are not divisible by an OCC length (or a product of an OCC application unit and the OCC length).

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, the OCC application unit may be determined as a value obtained by dividing a size/number of (entire) transmission resources by an OCC length, a value (pre-)configured/instructed by the base station, or a (pre-)defined value.

For example, when remaining resources that are not divisible by the OCC length occur, the UE may transmit by applying the OCC to transmission resources excluding the remaining resources (which are a multiple of the OCC length).

For example, the (physical) transmission resources may refer to resources before DFT precoding and/or time-domain resources and/or frequency-domain resources.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). For example, in this case, the OCC application unit may be N RBs. For example, when it is allowed that a size of transmission resources allocated for the uplink data channel is not a multiple of an OCC length and/or the OCC application unit (or a product of the OCC length and the OCC application unit), resources to which the OCC is not applied may occur. For example, when there are a total of 10 RBs, the OCC length is 4, and the size of the OCC application unit is 2 RBs, the total number of RBs to which the OCC may be applied is 4 x 2 = 8 RBs, but the number of actually allocated RBs is 10, and thus application of the OCC to two RBs may be ambiguous. For example, when the size of (entire) transmission resources (to which the OCC is to be applied) is not a multiple of the OCC length (or the product of the OCC application unit and the OCC length), the UE may perform one or more of the following (exception handling) operations.
(1) For example, transmission of the (corresponding) uplink data channel may be omitted.
(2) For example, the (entire) OCC may not be applied to the (corresponding) uplink data channel.
(3) For example, after resources are added such that the resources are a multiple of an OCC length (or a product of an OCC application unit and the OCC length), the OCC may be applied to the entire resources (including the added resources).
(4) For example, transmission of remaining resources that are not divisible by an OCC length (or a product of an OCC application unit and the OCC length) may be omitted.
(5) For example, the OCC may not be applied/may be partially applied to remaining resources that are not divisible by an OCC length (or a product of an OCC application unit and the OCC length).
(6) For example, an OCC having a short length may be applied to remaining resources that are not divisible by an OCC length (or a product of an OCC application unit and the OCC length).

For example, for (4), (5), and (6), the UE may transmit by applying the OCC to resources excluding the remaining resources, for example, resources that are a multiple of the OCC length (or the product of the OCC application unit and the OCC length). For example, in the case of (4), transmission of the remaining resources may be omitted. For example, in the case of (5), the remaining resources may be transmitted without applying the OCC to the remaining resources, or may be transmitted in a form in which an existing OCC is partially applied by applying a truncated OCC. For example, in the case of (6), the remaining resources may be transmitted by applying an OCC (hereinafter, a second OCC) having an OCC length shorter than that of the OCC conventionally applied (hereinafter, a first OCC). For example, according to the proposed method of the present disclosure, when a size of (entire) (transmission) resources (to which the OCC is to be applied) within the uplink data channel is not a multiple of the OCC length (or the product of the OCC length and the OCC application unit), a smooth transmission and reception process may be supported by clarifying exception handling operations between the base station and the UE.

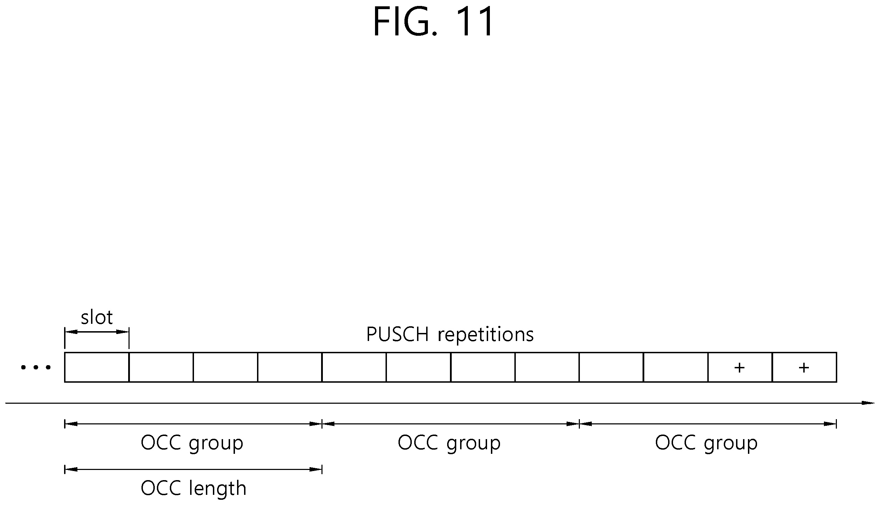

FIG. 11 shows an example of an OCC applied to PUSCH repetitions according to an embodiment of the present disclosure. The embodiment of FIG. 11 may be combined with various embodiments of the present disclosure.

Referring to FIG. 11, for example, PUSCH repetition may be performed. For example, the PUSCH repetition may be related to PUSCH repetition Type A. For example, in PUSCH repetition Type A, a PUSCH may be repeated in units of slots. For example, one PUSCH repetition may be one slot.

For example, an OCC with PUSCH repetition Type A may be a method of applying the OCC between PUSCH repetition(s) in which a PUSCH is repeated in units of slots. For example, a PUSCH allocated to one slot may be repeatedly transmitted over a plurality of slots, and the OCC may be applied across the PUSCH repetition(s).

For example, there may be an OCC group related to an OCC length. For example, the OCC length may be 2 or 4. For example, the OCC length may be 2. For example, the OCC length may not be limited to 2 or 4. For example, a number of OCC groups may be greater than or equal to one. For example, the number of OCC groups may be 2.

For example, according to proposed method #03, when a UE can apply an OCC to (transmission) resources of an uplink data channel (e.g., a PUSCH), when a size of (entire) (transmission) resources (to which the OCC is to be applied) is not a multiple of an OCC length (or a product of an OCC application unit and the OCC length), after resources are added such that the resources are a multiple of the OCC length (or the product of the OCC application unit and the OCC length), the OCC may be applied to the entire resources (including the added resources).

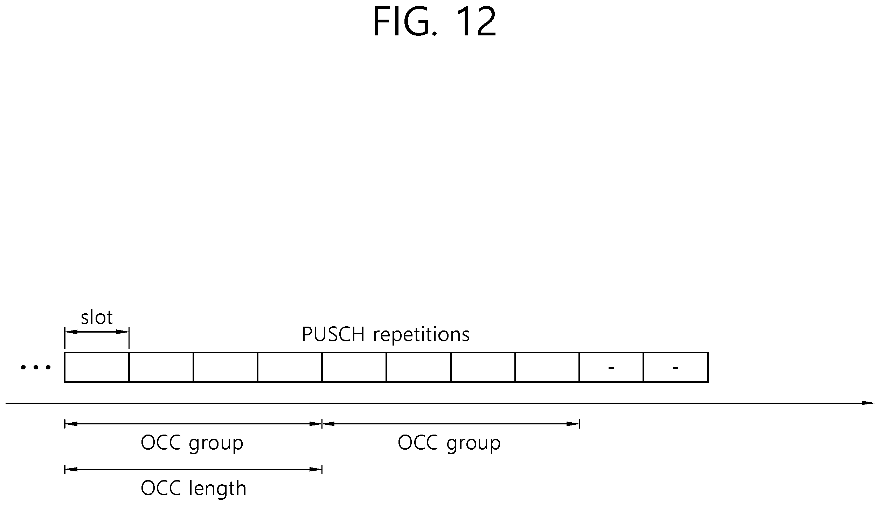

FIG. 12 shows an example of an OCC applied to PUSCH repetitions according to an embodiment of the present disclosure. The embodiment of FIG. 12 may be combined with various embodiments of the present disclosure.

Referring to FIG. 12, for example, PUSCH repetition may be performed. For example, the PUSCH repetition may be related to PUSCH repetition Type A. For example, in PUSCH repetition Type A, a PUSCH may be repeated in units of slots. For example, one PUSCH repetition may be one slot.

For example, an OCC with PUSCH repetition Type A may be a method of applying the OCC between PUSCH repetition(s) in which a PUSCH is repeated in units of slots. For example, a PUSCH allocated to one slot may be repeatedly transmitted over a plurality of slots, and the OCC may be applied across the PUSCH repetition(s).

For example, there may be an OCC group related to an OCC length. For example, the OCC length may be 2 or 4. For example, the OCC length may be 2. For example, the OCC length may not be limited to 2 or 4. For example, a number of OCC groups may be greater than or equal to one. For example, the number of OCC groups may be 2.

For example, according to proposed method #03, when a UE can apply an OCC to (transmission) resources of an uplink data channel (e.g., a PUSCH), when a size of (entire) (transmission) resources (to which the OCC is to be applied) is not a multiple of an OCC length (or a product of an OCC application unit and the OCC length), transmission of remaining resources that are not divisible by the OCC length (or the product of the OCC application unit and the OCC length) may be omitted.

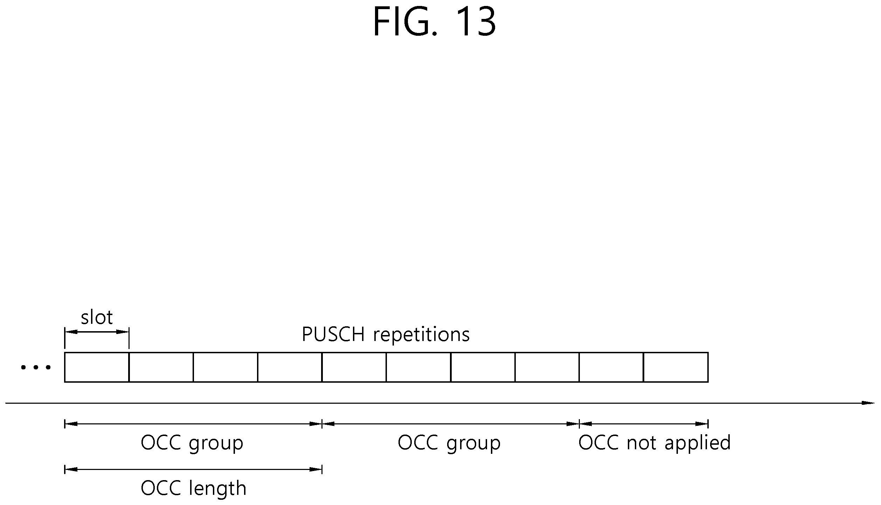

FIG. 13 shows an example of an OCC applied to PUSCH repetitions according to an embodiment of the present disclosure. The embodiment of FIG. 13 may be combined with various embodiments of the present disclosure.

Referring to FIG. 13, for example, PUSCH repetition may be performed. For example, the PUSCH repetition may be related to PUSCH repetition Type A. For example, in PUSCH repetition Type A, a PUSCH may be repeated in units of slots. For example, one PUSCH repetition may be one slot.

For example, an OCC with PUSCH repetition Type A may be a method of applying the OCC between PUSCH repetition(s) in which a PUSCH is repeated in units of slots. For example, a PUSCH allocated to one slot may be repeatedly transmitted over a plurality of slots, and the OCC may be applied across the PUSCH repetition(s).

For example, there may be an OCC group related to an OCC length. For example, the OCC length may be 2 or 4. For example, the OCC length may be 2. For example, the OCC length may not be limited to 2 or 4. For example, a number of OCC groups may be greater than or equal to one. For example, the number of OCC groups may be 2.

For example, according to proposed method #03, when a UE can apply an OCC to (transmission) resources of an uplink data channel (e.g., a PUSCH), when a size of (entire) (transmission) resources (to which the OCC is to be applied) is not a multiple of an OCC length (or a product of an OCC application unit and the OCC length), the OCC may not be applied to remaining resources that are not divisible by the OCC length (or the product of the OCC application unit and the OCC length).

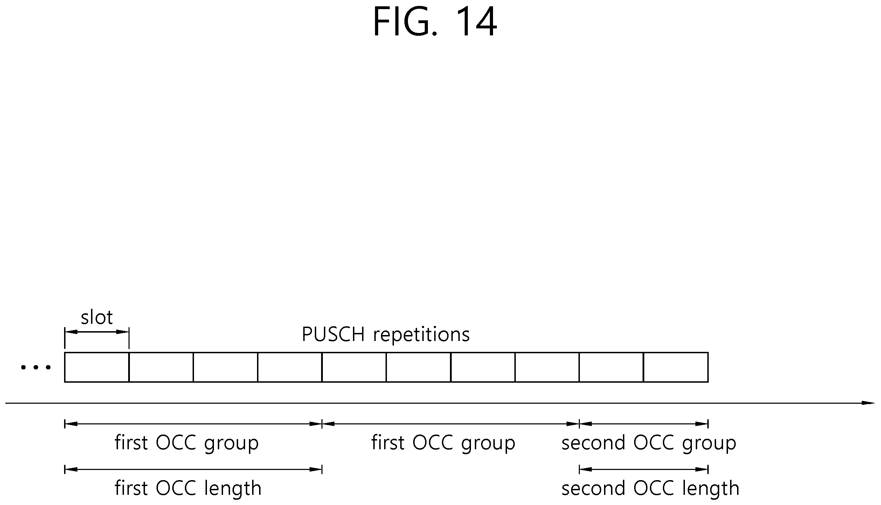

FIG. 14 shows an example of an OCC applied to PUSCH repetitions according to an embodiment of the present disclosure. The embodiment of FIG. 14 may be combined with various embodiments of the present disclosure.

Referring to FIG. 14, for example, PUSCH repetition may be performed. For example, the PUSCH repetition may be related to PUSCH repetition Type A. For example, in PUSCH repetition Type A, a PUSCH may be repeated in units of slots. For example, one PUSCH repetition may be one slot.

For example, an OCC with PUSCH repetition Type A may be a method of applying the OCC between PUSCH repetition(s) in which a PUSCH is repeated in units of slots. For example, a PUSCH allocated to one slot may be repeatedly transmitted over a plurality of slots, and the OCC may be applied across the PUSCH repetition(s).

For example, there may be an OCC group related to an OCC length. For example, the OCC length may be 2 or 4. For example, the OCC length may be 2. For example, the OCC length may not be limited to 2 or 4. For example, a number of OCC groups may be greater than or equal to one. For example, the number of OCC groups may be 2.

For example, according to proposed method #03, when a UE can apply an OCC to (transmission) resources of an uplink data channel (e.g., a PUSCH), when a size of (entire) (transmission) resources (to which the OCC is to be applied) is not a multiple of an OCC length (or a product of an OCC application unit and the OCC length), the OCC may be partially applied to remaining resources that are not divisible by the OCC length (or the product of the OCC application unit and the OCC length).

For example, according to proposed method #03, when a UE can apply an OCC to (transmission) resources of an uplink data channel (e.g., a PUSCH), when a size of (entire) (transmission) resources (to which the OCC is to be applied) is not a multiple of an OCC length (or a product of an OCC application unit and the OCC length), an OCC having a short length may be applied to remaining resources that are not divisible by the OCC length (or the product of the OCC application unit and the OCC length).

When a size of (entire) (transmission) resources (to which the OCC is to be applied) within an uplink data channel is not a multiple of an OCC length (or a product of the OCC length and an OCC application unit), a smooth transmission and reception process may be supported by clarifying exception handling operations between the base station and the UE.

For example, proposed method #03 may be applied in combination with other proposed method(s) within a range in which operations of the present disclosure do not conflict.

For example, proposed method #04 may be proposed.

For example, according to proposed method #04, when a UE can apply an OCC to (transmission) resources of an uplink data channel (e.g., a PUSCH), a method may be proposed in which the UE performs one or more of the following (exception handling) operations when phase tracking reference signal (PT-RS) transmission is configured and/or instructed for the uplink data channel (e.g., the PUSCH) for which OCC application is configured and/or instructed.
(1) For example, uplink data channel transmission may be omitted.
(2) For example, the PT-RS may be applied, and the OCC may not be applied.
(3) For example, the OCC may be applied, and the PT-RS may not be applied.
(4) For example, a PT-RS mapping rule within an OCC application unit may be applied.

A. For example, the PT-RS may be repeatedly allocated for a plurality of OCC application units.

(5) For example, rate-matching and/or RE mapping for data may be applied based on a maximum value of PT-RS OH per OCC application unit.

A. For example, the PT-RS may be allocated based on the entire transmission resources, and rate-matching and/or RE mapping for data may be applied based on a maximum value among PT-RS overheads (OHs) per OCC application unit.

(6) For example, application of rate-matching and/or RE mapping for data based on a union of PT-RS allocation resource(s) per OCC application unit

A. For example, the PT-RS may be allocated based on the entire transmission resources, and rate-matching and/or RE mapping for data may be applied based on a union of PT-RS allocation resource(s) per OCC application unit.

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). For example, in this case, the OCC application unit may be N RBs. For example, a resource domain to which the OCC is applied may be a resource domain before TF precoding or DFT precoding. For example, in a next-generation communication system according to an embodiment of the present disclosure, an operation of mapping a phase tracking reference signal (PT-RS) before the DFT precoding may be supported during DFT precoding-based uplink data channel (e.g., PUSCH) transmission. For example, the PT-RS mapping may follow a mapping method that does not consider OCC application, and, for example, PT-RS overheads (OHs) per OCC application unit may not be uniform. For example, in this case, a data allocation amount may vary per unit(s) to which the OCC is applied, and thus the same data may not be repeated, thereby causing an interference effect on uplink transmission of another UE. For example, accordingly, the present disclosure may propose a method in which, when the UE may apply the OCC to (transmission) resources of the uplink data channel (e.g., the PUSCH), the UE performs one or more of the following (exception handling) operations when phase tracking reference signal (PT-RS) transmission is configured and/or instructed for the uplink data channel (e.g., the PUSCH) for which OCC application is configured and/or instructed.
(1) For example, uplink data channel transmission may be omitted.
(2) For example, the PT-RS may be applied, and the OCC may not be applied.
(3) For example, the OCC may be applied, and the PT-RS may not be applied.
(4) For example, a PT-RS mapping rule within an OCC application unit may be applied.

A. For example, the PT-RS may be repeatedly allocated for a plurality of OCC application units.

(5) For example, rate-matching and/or RE mapping for data may be applied based on a maximum value of PT-RS OH per OCC application unit.

A. For example, the PT-RS may be allocated based on the entire transmission resources, and rate-matching and/or RE mapping for data may be applied based on a maximum value among PT-RS overheads (OHs) per OCC application unit.

(6) For example, application of rate-matching and/or RE mapping for data based on a union of PT-RS allocation resource(s) per OCC application unit

A. For example, the PT-RS may be allocated based on the entire transmission resources, and rate-matching and/or RE mapping for data may be applied based on a union of PT-RS allocation resource(s) per OCC application unit.

For example, when PT-RS transmission is configured and/or instructed for an uplink data channel (e.g., a PUSCH) for which OCC application is configured and/or instructed, the UE may omit transmission of the uplink data channel or may apply only one of the PT-RS and the OCC. For example, the UE may perform PT-RS mapping based on a unit in which data is repeated (or an OCC application unit). For example, in this case, data and the PT-RS may be repeatedly allocated together for a plurality of OCC application units within the entire resources. For example, the UE may calculate a maximum value of PT-RS overheads (OHs) per OCC application unit, and may perform rate-matching and/or RE mapping for data based on the maximum OH when calculating a size of a data payload repeated per OCC application unit. For example, the UE may calculate an (relative) PT-RS allocation resource group (within the OCC application unit) per OCC application unit, and may perform rate-matching and/or RE mapping for data based on a union of the (relative) PT-RS allocation resource group(s) (within the OCC application unit) when calculating the size of the data payload repeated per OCC application unit. For example, according to the proposed method of the present disclosure, there may be an advantage in that transmission and reception operations between the base station and the UE may be clearly defined even when PT-RS transmission is configured and/or instructed for the uplink data channel (e.g., the PUSCH) for which OCC application is configured and/or instructed.

For example, proposed method #04 may be applied in combination with other proposed method(s) within a range in which operations of the present disclosure do not conflict.

For example, proposed method #05 may be proposed.

For example, according to proposed method #05, when a UE can apply an OCC to transmission resources of an uplink data channel (e.g., a PUSCH), when the OCC is applied before DFT precoding and a size of (entire) transmission resources (to which the OCC is to be applied) is 1 physical resource block (PRB), a method of allocating (at least) one front resource element (RE) and one rear RE within an OCC application unit as phase tracking reference signal (PT-RS) resources may be proposed.

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, the PRB may be composed of a plurality of resource element(s) (RE(s)).

For example, the OCC application unit may be composed of greater than or equal to three REs.

For example, data and PT-RS allocation within the OCC application unit may be repeatedly transmitted per OCC application unit.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). For example, in this case, the OCC application unit may be N RBs. For example, a resource domain to which the OCC is applied may be a resource domain before TF precoding or DFT precoding. For example, the method of applying the OCC before DFT precoding may be a method of supporting uplink multiplexing in a CDM manner other than an FDM manner within one OFDM symbol, and may be particularly useful when a resource allocation less than 1 RB is sufficient for a size of uplink data to be transmitted and multiplexing is difficult to achieve using the FDM manner having a minimum granularity of 1 RB (e.g., supporting sub-PRB allocation or UL multiplexing within 1 PRB). For example, when transmission resources within 1 PRB are divided into a plurality of OCC application units and the OCC is applied as described above, each OCC application unit may be composed of several resource element(s) (RE(s)). For example, because a mapping rule for a conventional PT-RS is defined only for RB-unit allocation, a new mapping rule may need to be defined for allocation of less than 1 PRB. For example, accordingly, the present disclosure may propose a method of allocating one front RE and one rear RE within an OCC application unit as PT-RS resources when the UE may apply the OCC to transmission resources of the uplink data channel (e.g., the PUSCH), the OCC is applied before DFT precoding, and a size of (entire) transmission resources (to which the OCC is to be applied) is 1 PRB. For example, according to the proposal of the present disclosure, there may be an advantage in that phase tracking in the time domain is still supported by ensuring at least two PT-RS REs, and PT-RS allocation may be supported even during OCC-based uplink data channel transmission within 1 PRB. For example, one or more data transmission REs may be included to secure data transmission REs excluding the (at least) two REs for the PT-RS.

For example, proposed method #05 may be applied in combination with other proposed method(s) within a range in which operations of the present disclosure do not conflict.

For example, proposed method #06 may be proposed.

For example, according to proposed method #06, when a UE can apply an OCC to transmission resources of an uplink data channel (e.g., a PUSCH), a method of interpreting a (frequency) resource allocation configuration/instruction for the uplink data channel according to one or more of the following methods may be proposed.
(1) For example, the configuration/instruction may be interpreted as a (frequency) resource allocation size before OCC application.
   A. For example, the configuration/instruction may be interpreted as a size of an OCC application unit.
   B. For example, a transport block size (TBS) may be calculated based on a (frequency) resource allocation size before OCC application, and the UE may apply a (conventional) TBS calculation method based on the (frequency) resource allocation size before OCC application according to the (frequency) resource allocation configuration/instruction for the uplink data channel.
(2) For example, interpretation as a (frequency) resource allocation size after OCC application
   A. For example, the configuration/instruction may be interpreted as a resource size corresponding to a product of a size of an OCC application unit and an OCC length.
   B. For example, a transport block size (TBS) may be calculated based on a (frequency) resource allocation size before OCC application, and the UE may process a (frequency) resource allocation size after OCC application according to a (frequency) resource allocation configuration/instruction for the uplink data channel, derive the (frequency) resource allocation size before OCC application, and then calculate the TBS based thereon (a new TBS calculation method).

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, the transport block size (TBS) may refer to a payload size of data.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied per OCC application unit. For example, the OCC application unit may refer to a resource group and/or a resource unit to which each element of the OCC is applied. For example, when the OCC is [+1 -1 +1 -1], each element +1, -1, +1, and -1 of the OCC may be applied in units of N RBs to a total of 4N resource blocks (RBs). In this case, the OCC application unit may be N RBs. For example, a resource domain to which the OCC is applied may be a resource domain before/after DFT precoding. For example, resource allocation information of the uplink data channel to which the OCC is applied may be largely interpreted according to the following two methods.
(1) For example, the resource allocation information may be interpreted as a (frequency) resource allocation size before OCC application.
   A. For example, the resource allocation information may be interpreted as a size of an OCC application unit.
   B. For example, a transport block size (TBS) may be calculated based on a (frequency) resource allocation size before OCC application, and the UE may apply a (conventional) TBS calculation method based on the (frequency) resource allocation size before OCC application according to the (frequency) resource allocation configuration/instruction for the uplink data channel.
(2) For example, the resource allocation information may be interpreted as a (frequency) resource allocation size after OCC application.
   A. For example, the resource allocation information may be interpreted as a resource size corresponding to a product of a size of an OCC application unit and an OCC length.
   B. For example, a transport block size (TBS) may be calculated based on a (frequency) resource allocation size before OCC application, and the UE may process a (frequency) resource allocation size after OCC application according to a (frequency) resource allocation configuration/instruction for the uplink data channel, derive the (frequency) resource allocation size before OCC application, and then calculate the TBS based thereon (a new TBS calculation method).

For example, when a method of interpreting the resource allocation information as a (frequency) resource allocation size before OCC application is applied, there may be a disadvantage in that a (final) (frequency) resource allocation size after OCC application needs to be recalculated by a scheduler or the like of the base station, but there may be an advantage in that a conventional calculation method may be maintained when calculating a TBS. For example, when a method of interpreting the resource allocation information as a (frequency) resource allocation size after OCC application is applied, there may be an advantage in that the (final) (frequency) resource allocation size after OCC application may be immediately known by the scheduler or the like of the base station, but there may be a disadvantage in that the (frequency) resource allocation size before OCC application needs to be recalculated when calculating the TBS. For example, according to the proposed method of the present disclosure, there may be an advantage in facilitating resource scheduling at the base station and/or TBS calculation of the UE by allowing configuration/instruction information related to conventional (frequency) resource allocation to be interpreted before/after OCC application.

For example, proposed method #06 may be applied in combination with other proposed method(s) within a range in which operations of the present disclosure do not conflict.

For example, proposed method #07 may be proposed.

For example, according to proposed method #07, when a UE can apply an OCC to transmission resources of an uplink data channel (e.g., a PUSCH), a method may be proposed in which a plurality of resource groups to which the OCC is applied are defined/configured/instructed, and an OCC index per OCC application resource group is configured/instructed according to one or more of the following methods.
(1) For example, a single OCC index may be configured/instructed, and an OCC index offset per OCC application resource group may be applied.
(2) For example, configuration/instruction of an OCC index per OCC application resource group

For example, whether the OCC is applied may be configured/instructed by the base station.

For example, the OCC index offset may be (pre-)agreed and/or (pre-)defined and/or (pre-)configured and/or (pre-)instructed from the base station.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied before/after DFT precoding. For example, it may be assumed that the OCC for the uplink data channel (e.g., the PUSCH) is applied after DFT precoding. For example, the OCC may be an OCC applied to frequency-domain resources. For example, to achieve a low peak to average power ratio (PAPR) characteristic, the base station may configure/instruct one or more resource groups to which the OCC is applied. For example, the base station may configure/instruct a plurality of resource groups to which the OCC is applied for the UE, and may transmit with a Low PAPR characteristic by differentially applying an OCC index per OCC application resource group. For example, the OCC index per OCC application resource group may be applied in a method in which the base station configures/instructs a single OCC index and applies an OCC index offset per OCC resource group, or in a method in which the base station configures/instructs an OCC index per OCC resource group. For example, according to the proposed method of the present disclosure, there may be an advantage in that a low PAPR characteristic may be supported by providing a plurality of OCC application resource groups and differentiating an OCC index per OCC application resource group.

For example, proposed method #07 may be applied in combination with other proposed method(s) within a range in which operations of the present disclosure do not conflict.

For example, proposed method #08 may be proposed.

For example, according to proposed method #08, when a UE can apply an OCC to transmission resources of an uplink data channel (e.g., a PUSCH), a method of configuring an OCC application unit in an interlace form may be proposed.

For example, whether the OCC is applied may be configured/instructed by the base station.

For example, the OCC application unit may refer to a resource group and/or a resource unit to which each element of the OCC is applied. For example, when the OCC is [+1 +1] and +1 and +1 are multiplied per RB for a total of two RBs, the RB may be the OCC application unit.

For example, the data may be repeatedly allocated/transmitted for the OCC application unit(s).

For example, the base station may configure/instruct information related to the interlace configuration for the UE.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied before/after DFT precoding. For example, it may be assumed that the OCC for the uplink data channel (e.g., the PUSCH) is applied after DFT precoding. The OCC may be an OCC applied to frequency-domain resources. For example, to achieve a low peak to average power ratio (PAPR) characteristic, the base station may configure an OCC application unit in an interlace form. For example, one interlace structure may refer to a resource allocation structure in which data allocation occurs at equal intervals. For example, the interlace may be interpreted as a form in which zeros are added between conventional data symbol(s), and may be a resource allocation method advantageous in terms of PAPR compared with cluster-based resource allocation because the interlace has a form repeated in the time domain. For example, accordingly, the present disclosure may propose a method of configuring an OCC application unit in an interlace form when the UE may apply the OCC to transmission resources of the uplink data channel (e.g., the PUSCH). According to the proposed method of the present disclosure, there may be an advantage in supporting a Low PAPR characteristic while supporting OCC application.

For example, proposed method #08 may be applied in combination with other proposed method(s) within a range in which operations of the present disclosure do not conflict.

For example, proposed method #09 may be proposed.

For example, according to proposed method #09, when a UE can apply an OCC to transmission resources of an uplink data channel (e.g., a PUSCH), and when the OCC may be applied in units of transmission symbol groups of the uplink data channel, a method of defining the symbol group according to one of the following methods may be proposed.
(1) For example, a symbol group based on physical symbol indexing may be defined.
   A. For example, the physical symbol indexing may refer to symbol indexing based on a slot boundary.
(2) For example, a symbol group based on available symbol indexing may be defined.
   A. For example, the available symbol indexing may refer to symbol indexing based on a start of PUSCH transmission.

For example, whether the OCC is applied may be configured/instructed by the base station.

For example, the available symbol may refer to a UL symbol and/or a non-DM-RS symbol and/or a non-PT-RS symbol.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the OCC may be applied in units of transmission symbol groups of the uplink data channel. For example, in this case, the symbol group may be defined according to the following two methods.
(1) For example, a symbol group based on physical symbol indexing may be defined.
   A. For example, the physical symbol indexing may refer to symbol indexing based on a slot boundary.
(2) For example, a symbol group based on available symbol indexing may be defined.
   A. For example, the available symbol indexing may refer to symbol indexing based on a start of PUSCH transmission.

For example, when a symbol group is defined based on physical symbol indexing, symbol groups to which the OCC is applied may be defined to coincide (in the time domain) even when (time-domain) scheduling resources of uplink data channels are different between different UEs. For example, accordingly, the method may have an advantage in relatively flexibly supporting multiplexing of uplink data channels. For example, when a symbol group is defined based on available symbol indexing, non-data symbols may be excluded from a symbol group to which the OCC is to be applied, such that all symbol groups may have uniform RS overheads (OHs). For example, accordingly, the method may have an advantage in maximizing a data allocation amount within a symbol group unit to which the OCC is applied. For example, according to the proposed method of the present disclosure, the base station and/or the UE may form a symbol group (to which the OCC is to be applied) based on physical or available symbol indexing according to a pursued direction, and thus there may be an advantage in pursuing flexible uplink multiplexing support between different scheduling operations, support for maximizing a data payload during multiplexing, or the like.

For example, proposed method #09 may be applied in combination with other proposed method(s) within a range in which operations of the present disclosure do not conflict.

For example, proposed method #10 may be proposed.

For example, according to proposed method #10, when a UE can apply an OCC to transmission resources (or repeated transmission thereof) of an uplink data channel (e.g., a PUSCH), a method may be proposed in which the UE does not perform a power control operation configured/instructed by a base station or a UE-initiated power control operation during a transmission interval of the uplink data channel to which the OCC is applied.

For example, whether the OCC is applied may be configured/instructed by the base station.

For example, in a next-generation mobile communication system according to an embodiment of the present disclosure, it may be assumed that a UE transmits an uplink data channel (e.g., a PUSCH) by applying an OCC to transmission resources (or repeated transmission thereof) of the uplink data channel. For example, it may be assumed that the UE repeatedly transmits the uplink data channel over a plurality of slots and applies the OCC to the repeated transmission. For example, in this case, a power consistency characteristic within a repeated transmission interval to which the OCC is applied needs to be ensured to ensure an orthogonal characteristic of the OCC. For example, accordingly, the present disclosure may propose a method in which, when the UE may apply the OCC to transmission resources (or repeated transmission thereof) of the uplink data channel (e.g., the PUSCH), the UE does not perform a power control operation configured/instructed by the base station or a UE-initiated power control operation during a transmission interval of the uplink data channel to which the OCC is applied. For example, according to the proposed method of the present disclosure, it may be possible to prevent a situation in which the UE arbitrarily performs a power control operation during an OCC operation and causes interference to another transmission.

For example, proposed method #10 may be applied in combination with other proposed method(s) within a range in which operations of the present disclosure do not conflict.

For example, proposed method #11 may be proposed.

For example, according to proposed method #11, when a UE can apply an OCC to transmission resources (or repeated transmission thereof) of an uplink data channel (e.g., a PUSCH), a method may be proposed in which a base station transmits, to the UE, a separate RS configuration (hereinafter, a second RS configuration) distinguished from an RS configuration actually applied to the uplink data channel (e.g., the PUSCH) (hereinafter, a first RS configuration), and the UE performs resource grouping for OCC application by using the second RS configuration.

For example, whether the OCC is applied may be configured/instructed by the base station.

For example, the OCC may be applied between symbols (groups) within (a single and/or a plurality of) uplink data channels.

For example, the UE may assume transmission resource(s) (or symbol(s)) other than transmission resource(s) (or symbol(s)) included in the second RS configuration as valid transmission resource(s) (or symbol(s)), and may determine transmission resource(s) (or symbol(s)) to which an OCC sequence is to be applied among the valid transmission resource(s) (or symbol(s)).

For example, the second RS configuration may be different from the first RS configuration. For example, the second RS configuration may be configured as a union of a plurality of first RS configurations. For example, the second RS configuration may be transmitted as a separate configuration, but may also be transmitted as the same configuration as the first RS configuration. For example, when the second RS configuration is not separately transmitted, the UE may regard the first RS configuration as the second RS configuration and perform OCC application resource grouping.

For example, the first RS configuration and/or the second RS configuration may include a demodulation reference signal (DM-RS) configuration and/or a sounding reference signal (SRS) configuration and/or a phase tracking reference signal (PT-RS) configuration.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the UE may apply the OCC between symbols and/or between symbol groups within a (single) uplink data channel (hereinafter, a PUSCH). For example, because time-domain resource allocation of the PUSCH and/or an RS configuration within the PUSCH may be flexibly configured/instructed, a resource grouping process for applying the OCC may become complicated depending on the RS configuration. For example, when different UEs within a cell have different demodulation reference signal (DM-RS) configurations, symbol grouping configurations for applying the OCC may differ, and mutual OCC-based orthogonalization may not be supported. For example, accordingly, the present disclosure may propose a method in which, when the UE may apply the OCC to transmission resources (or repeated transmission thereof) of the uplink data channel (e.g., the PUSCH), the base station transmits, to the UE, a separate RS configuration (hereinafter, a second RS configuration) distinguished from an RS configuration actually applied to the uplink data channel (e.g., the PUSCH) (hereinafter, a first RS configuration), and the UE performs resource grouping for OCC application by using the second RS configuration. For example, the base station may transmit, to the UE, an RS configuration (hereinafter, the second RS configuration) as a superset including an actual RS configuration within the PUSCH (hereinafter, the first RS configuration). For example, the second RS configuration may be configured as a union of a plurality of first RS configurations to be operated within the cell. For example, the UE may assume transmission resource(s) (or symbol(s)) other than transmission resource(s) (or symbol(s)) included in the second RS configuration as valid transmission resource(s) (or symbol(s)), and may determine transmission resource(s) (or symbol(s)) to which an OCC sequence is to be applied among the valid transmission resource(s) (or symbol(s)). For example, when the second RS configuration is not separately transmitted to the UE, the UE may regard the first RS configuration as the second RS configuration and perform OCC application resource grouping. For example, the second RS configuration may include a demodulation reference signal (DM-RS) configuration and/or a sounding reference signal (SRS) configuration and/or a phase tracking reference signal (PT-RS) configuration. For example, according to the proposed method of the present disclosure, there may be an advantage in easily achieving OCC-based orthogonalization because a common RS configuration may be referred to during resource grouping for OCC application even between uplink data channel(s) having different RS configurations within a cell or between cells.

For example, proposed method #11 may be applied in combination with other proposed method(s) within a range in which operations of the present disclosure do not conflict.

For example, proposed method #12 may be proposed.

For example, according to proposed method #12, when a UE can apply an OCC to transmission resources (or repeated transmission thereof) of an uplink data channel (e.g., a PUSCH), a method may be proposed in which (valid) symbol(s) within the uplink data channel are divided into a plurality of symbol groups, and control information within the uplink data channel is mapped according to one or more of the following rules.
(1) For example, a first mapping method: a method of allocating the control information in a frequency-first manner starting from a first symbol group may be proposed.
   A. For example, when all (available) frequency resources within the first symbol group are used, allocation may be resumed by moving to a next symbol group in order (based on the time domain).
(2) For example, a second mapping method: a method of allocating the control information in a frequency-first manner starting from a first symbol group including a first DM-RS symbol (group) may be proposed.
   A. For example, when all (available) frequency resources within the first symbol group including the first DM-RS symbol (group) are used, allocation may be resumed by moving to a next symbol group in order (based on the time domain).
(3) For example, a third mapping method: a method of allocating the control information in a frequency-first manner starting from a first symbol group after a first DM-RS symbol (group) may be proposed.
   A. For example, when all (available) frequency resources within the first symbol group after the first DM-RS symbol (group) are used, allocation may be resumed by moving to a next symbol group in order (based on the time domain).
(4) For example, a fourth mapping method: a method of allocating the control information in a frequency-first manner starting from a symbol group including and/or surrounding a DM-RS symbol (group) may be proposed.
   A. For example, when all (available) frequency resources within the symbol group including and/or surrounding the DM-RS symbol (group) are used, allocation may be resumed by moving to a next surrounding symbol group in order (according to a specific pattern).

For example, whether the OCC is applied may be configured/instructed by the base station.

For example, an OCC between symbols within a symbol group and/or an OCC between symbol groups may be applied to the uplink data channel.

For example, the symbol group may be composed of consecutive (valid) symbol(s).

For example, the (valid) symbol(s) may refer to symbol(s) other than DM-RS symbol(s).

For example, a mapping method may be differently applied according to a type of the control information (e.g., HARQ-ACK, CSI part 1, CSI part 2, or the like). For example, HARQ-ACK may be allocated according to the second and/or third and/or fourth mapping method, and CSI may be allocated according to the first mapping method.

For example, resource allocation may be performed such that data of one symbol is repeated within the symbol group. For example, different data may be allocated per symbol within the symbol group, and resource allocation may be performed such that the different data is repeated in units of symbol groups.

For example, a number of symbols within the symbol group may be equal to and/or a multiple of an OCC length.

For example, a total amount of allocatable resources for control information and/or UCI allocated within the OCC-based uplink data channel may be reduced in proportion to an OCC length compared with a case in which the OCC is not applied (e.g., reduced by a value obtained by dividing by the OCC length). For example, a number of resource elements (REs) of the control information and/or UCI allocated within the OCC-based uplink data channel may be restricted to be a multiple of the OCC length (based on a number of REs after OCC application).

For example, when allocation of the control information reaches a last symbol group, allocation of the control information may be resumed in a forward direction starting from a first symbol group (in the time domain), or allocation of the control information may be resumed in a reverse direction from a first symbol group to which the control information is allocated.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the UE may apply the OCC between symbols and/or between symbol groups within a (single) uplink data channel (hereinafter, a PUSCH). For example, when two DM-RS symbols exist within the PUSCH and a total number of symbols is 14, the UE may apply a length-4 OCC to 12 data symbols. For example, the 12 symbols may be composed of three symbol groups each including four symbols, and may have a structure in which data of one symbol is repeatedly allocated and the OCC is applied within the symbol group. For example, the PUSCH to which the OCC is applied may transmit a data payload corresponding to three symbols. For example, when control information within the PUSCH, for example, uplink control information (UCI), can be piggybacked, the UCI may be allocated to one or more of the symbol groups. For example, it may be desirable to allocate control information such as UCI starting from a symbol near a DM-RS having the best channel estimation performance. For example, accordingly, the present disclosure may propose a method in which, when the UE may apply the OCC to transmission resources (or repeated transmission thereof) of the uplink data channel (e.g., the PUSCH), (valid) symbol(s) within the uplink data channel are divided into a plurality of symbol groups, and control information within the uplink data channel is mapped according to one or more of the following rules.
(1) For example, a first mapping method: a method of allocating the control information in a frequency-first manner starting from a first symbol group may be proposed.
   A. For example, when all (available) frequency resources within the first symbol group are used, allocation may be resumed by moving to a next symbol group in order (based on the time domain).
(2) For example, a second mapping method: a method of allocating the control information in a frequency-first manner starting from a first symbol group including a first DM-RS symbol (group) may be proposed.
   A. For example, when all (available) frequency resources within the first symbol group including the first DM-RS symbol (group) are used, allocation may be resumed by moving to a next symbol group in order (based on the time domain).
(3) For example, a third mapping method: a method of allocating the control information in a frequency-first manner starting from a first symbol group after a first DM-RS symbol (group) may be proposed.
   A. For example, when all (available) frequency resources within the first symbol group after the first DM-RS symbol (group) are used, allocation may be resumed by moving to a next symbol group in order (based on the time domain).
(4) For example, a fourth mapping method: a method of allocating the control information in a frequency-first manner starting from a symbol group including and/or surrounding a DM-RS symbol (group) may be proposed.
   A. For example, when all (available) frequency resources within the symbol group including and/or surrounding the DM-RS symbol (group) are used, allocation may be resumed by moving to a next surrounding symbol group in order (according to a specific pattern).

For example, the second and/or third and/or fourth mapping method may be a mapping method for ensuring UCI reception performance in consideration of channel estimation performance when UCI is allocated within the PUSCH to which the OCC is applied. For example, the first mapping method may be a mapping method for allocating control information having relatively low importance. For example, among UCI, HARQ-ACK may be allocated according to the second and/or third and/or fourth mapping method, and CSI may be allocated according to the first mapping method. For example, according to the proposed method of the present disclosure, there may be an advantage in ensuring UCI reception performance by supporting UCI allocation in consideration of channel estimation performance when UCI is allocated within the PUSCH to which the OCC is applied.

For example, proposed method #12 may be applied in combination with other proposed method(s) within a range in which operations of the present disclosure do not conflict.

For example, proposed method #13 may be proposed.

For example, according to proposed method #13, when a UE can apply an OCC to transmission resources (or repeated transmission thereof) of an uplink data channel (e.g., a PUSCH), a method may be proposed in which (valid) symbol(s) within the uplink data channel are divided into a plurality of symbol groups, and control information within the uplink data channel is mapped according to one or more of the following rules.
(1) For example, a first mapping method: the control information may be allocated in a frequency-first manner starting from a symbol group including a first symbol.
   A. For example, after (available) frequency resources within the symbol group including the first symbol are first allocated, allocation may be resumed for a symbol group including a next unallocated symbol (based on the time domain).
(2) For example, a second mapping method: a method of allocating the control information in a frequency-first manner starting from a symbol group including a symbol immediately before and/or immediately after a first DM-RS symbol (group) may be proposed.
   A. For example, after (available) frequency resources within the symbol group including the symbol immediately before and/or immediately after the first DM-RS symbol (group) are first allocated, allocation may be resumed for a symbol group including a next unallocated symbol (based on the time domain).
(3) For example, a third mapping method: a method of allocating the control information in a frequency-first manner starting from a symbol group including a symbol surrounding a DM-RS symbol (group)
   A. For example, a specific order may be assigned to surrounding symbol(s) of the DM-RS symbol (group), (available) frequency resources within a symbol group including a first surrounding symbol in the order may be first allocated, and then allocation may be resumed by moving to a symbol group including a next unallocated surrounding symbol in the order.

For example, whether the OCC is applied may be configured/instructed by the base station.

For example, data within the symbol group may be repeated in units of symbols.

For example, the symbol group may be composed of consecutive (valid) symbol(s) or non-consecutive (valid) symbol(s) (having equal intervals).

For example, the OCC may be applied between symbols within a symbol group and/or between symbol groups.

For example, the (valid) symbol(s) may refer to symbol(s) other than DM-RS symbol(s).

For example, a mapping method may be differently applied according to a type of the control information (e.g., HARQ-ACK, CSI part 1, CSI part 2, or the like). For example, HARQ-ACK may be allocated according to the second and/or third mapping method, and CSI may be allocated according to the first mapping method.

For example, a number of symbols within the symbol group may be equal to and/or a multiple of an OCC length.

For example, a total amount of allocatable resources for control information and/or UCI allocated within the OCC-based uplink data channel may be reduced in proportion to an OCC length compared with a case in which the OCC is not applied (e.g., reduced by a value obtained by dividing by the OCC length). For example, a number of resource elements (REs) of the control information and/or UCI allocated within the OCC-based uplink data channel may be restricted to be a multiple of the OCC length (based on a number of REs after OCC application).

For example, when allocation of the control information reaches a symbol group including a last symbol, allocation of the control information may be resumed in a forward direction starting from a symbol group including a first symbol (in the time domain), or allocation of the control information may be resumed in a reverse direction from a symbol group including a first symbol to which the control information is allocated.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the UE may apply the OCC between symbols and/or between symbol groups within a (single) uplink data channel (hereinafter, a PUSCH). For example, when two DM-RS symbols exist within the PUSCH and a total number of symbols is 14, the UE may apply a length-4 OCC to 12 data symbols. For example, the 12 symbols may be composed of three symbol groups each including four symbols, and may have a structure in which data of one symbol is repeatedly allocated and the OCC is applied within the symbol group. For example, the PUSCH to which the OCC is applied may transmit a data payload corresponding to three symbols. For example, when control information within the PUSCH, for example, uplink control information (UCI), can be piggybacked, the UCI may be allocated to one or more of the symbol groups. For example, it may be desirable to allocate control information such as UCI starting from a symbol near a DM-RS having the best channel estimation performance. For example, accordingly, the present disclosure may propose a method in which, when the UE may apply the OCC to transmission resources (or repeated transmission thereof) of the uplink data channel (e.g., the PUSCH), (valid) symbol(s) within the uplink data channel are divided into a plurality of symbol groups, and control information within the uplink data channel is mapped according to one or more of the following rules.
(1) For example, a first mapping method: the control information may be allocated in a frequency-first manner starting from a symbol group including a first symbol.
   A. For example, after (available) frequency resources within the symbol group including the first symbol are first allocated, allocation may be resumed for a symbol group including a next unallocated symbol (based on the time domain).
(2) For example, a second mapping method: a method of allocating the control information in a frequency-first manner starting from a symbol group including a symbol immediately before and/or immediately after a first DM-RS symbol (group)
   A. For example, after (available) frequency resources within the symbol group including the symbol immediately before and/or immediately after the first DM-RS symbol (group) are first allocated, allocation may be resumed for a symbol group including a next unallocated symbol (based on the time domain).
(3) For example, a third mapping method: a method of allocating the control information in a frequency-first manner starting from a symbol group including a symbol surrounding a DM-RS symbol (group) may be proposed.
   A. For example, a specific order may be assigned to surrounding symbol(s) of the DM-RS symbol (group), (available) frequency resources within a symbol group including a first surrounding symbol in the order may be first allocated, and then allocation may be resumed by moving to a symbol group including a next unallocated surrounding symbol in the order.

For example, the second and/or third mapping method may be a mapping method for ensuring UCI reception performance in consideration of channel estimation performance when UCI is allocated within the PUSCH to which the OCC is applied. For example, the first mapping method may be a mapping method for allocating control information having relatively low importance. For example, among UCI, HARQ-ACK may be allocated according to the second and/or third mapping method, and CSI may be allocated according to the first mapping method. For example, according to the proposed method of the present disclosure, there may be an advantage in ensuring UCI reception performance by supporting UCI allocation in consideration of channel estimation performance when UCI is allocated within the PUSCH to which the OCC is applied.

For example, proposed method #13 may be applied in combination with other proposed method(s) within a range in which operations of the present disclosure do not conflict.

For example, proposed method #14 may be proposed.

For example, according to proposed method #14, when a UE can apply an OCC to transmission resources (or repeated transmission thereof) of an uplink data channel (e.g., a PUSCH), a method of supporting one or more of the following operations may be proposed when a number of (valid) symbol(s) within the uplink data channel in a slot is not a multiple of an OCC length.
(1) For example, the OCC may not be applied.
(2) For example, entire PUSCH transmission may be omitted.
(3) For example, transmission of remaining symbol(s), the number of which is not divisible by the OCC length, may be omitted.
(4) For example, an OCC having a different length may be applied to remaining symbol(s), the number of which is not divisible by the OCC length.
(5) For example, when repeated transmission of the uplink data channel exists in a next slot, N1 symbols of a previous slot and N2 slots of a subsequent slot may be formed as a symbol group for OCC application.

For example, whether the OCC is applied may be configured/instructed by the base station.

For example, an OCC between symbols within a symbol group and/or an OCC between symbol groups may be applied to the uplink data channel.

For example, the symbol group may be composed of consecutive (valid) symbol(s).

For example, the (valid) symbol(s) may refer to symbol(s) other than DM-RS symbol(s).

For example, some operation(s) among the operations may be performed under configuration/instruction of the base station.

For example, resource allocation may be performed such that data of one symbol is repeated within the symbol group. For example, different data may be allocated per symbol within the symbol group, and resource allocation may be performed such that the different data is repeated in units of symbol groups.

For example, in a next-generation mobile communication system according to an embodiment of the present disclosure, it may be assumed that a UE transmits an uplink data channel (e.g., a PUSCH) by applying an OCC to transmission resources of the uplink data channel. For example, the UE may apply the OCC between symbols and/or between symbol groups within a (single) uplink data channel (hereinafter, a PUSCH). For example, because time-domain resource allocation of the PUSCH and/or an RS configuration within the PUSCH may be flexibly configured/instructed, a resource grouping process for applying the OCC may become complicated depending on the RS configuration. For example, according to the time-domain resource allocation and/or DM-RS configuration of the PUSCH, a case may occur in which a number of (valid) symbol(s) other than a DM-RS is not a multiple of an OCC length to be applied. For example, in this case, it may be necessary to define whether the UE still applies the OCC and/or, when the UE applies the OCC, in what manner the UE applies the OCC. For example, accordingly, the present disclosure may propose a method of supporting one or more of the following operations when the UE may apply the OCC to transmission resources (or repeated transmission thereof) of the uplink data channel (e.g., the PUSCH), and a number of (valid) symbol(s) within the uplink data channel in a slot is not a multiple of the OCC length.
(1) For example, the OCC may not be applied.
(2) For example, entire PUSCH transmission may be omitted.
(3) For example, transmission of remaining symbol(s), the number of which is not divisible by the OCC length, may be omitted.
(4) For example, an OCC having a different length may be applied to remaining symbol(s), the number of which is not divisible by the OCC length.
(5) For example, when repeated transmission of the uplink data channel exists in a next slot, N1 symbols of a previous slot and N2 slots of a subsequent slot may be formed as a symbol group for OCC application.

For example, when a UE repeatedly transmits a PUSCH in units of slots, the UE may form a symbol group for OCC application with respect to all (valid) symbol(s) within PUSCH repeated transmission. For example, when the PUSCH is repeated within two slots and there are 12 (valid) symbols other than a DM-RS per slot, the UE may configure a symbol group for OCC application based on a total of 24 (valid) symbol(s). For example, when an OCC length is 8, the UE may form 24/8 = 3 symbol groups, each symbol group having eight symbols, and a second symbol group may extend across a first repeatedly transmitted slot and a second repeatedly transmitted slot. For example, according to the proposed method of the present disclosure, there may be an advantage in clarifying an OCC application operation of the UE according to a relationship between a number of (valid) symbols within PUSCH (repeated) transmission and an OCC length.

For example, proposed method #14 may be applied in combination with other proposed method(s) within a range in which operations of the present disclosure do not conflict.

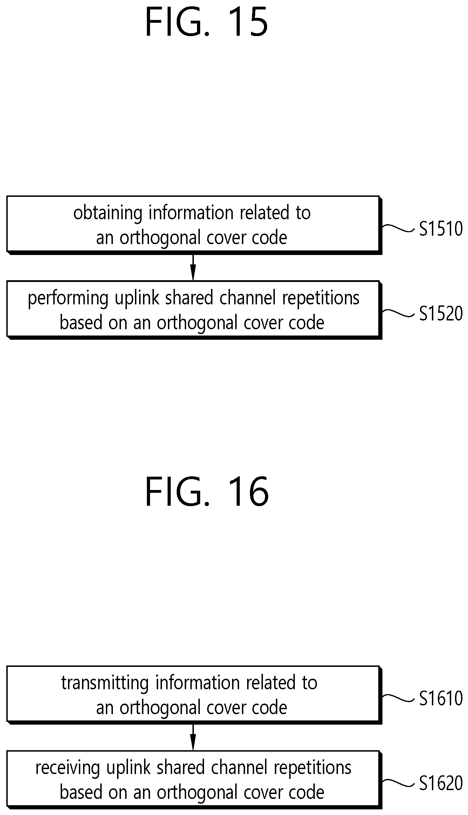

FIG. 15 shows a method for a device to perform wireless communication, based on an embodiment of the present disclosure. The embodiment of FIG. 15 may be combined with various embodiments of the present disclosure.

Referring to FIG. 15, in step S1510, the device may obtain information related to an orthogonal cover code. In step S1520, the device may perform a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

For example, based on that the number of the plurality of uplink shared channel repetitions is not the multiple of the length of the orthogonal cover code, at least one uplink shared channel repetition may be added such that the number of the plurality of uplink shared channel repetitions is a multiple of the length of the orthogonal cover code. For example, the orthogonal cover code may be applied to the plurality of uplink shared channel repetitions including the at least one uplink shared channel repetition.

For example, based on that the number of the plurality of uplink shared channel repetitions is not the multiple of the length of the orthogonal cover code, transmission of second uplink shared channel repetitions, among the plurality of uplink shared channel repetitions, a number of which is not divisible by the length of the orthogonal cover code, may be dropped.

For example, based on that the number of the plurality of uplink shared channel repetitions is not the multiple of the length of the orthogonal cover code, the orthogonal cover code may not be applied to second uplink shared channel repetitions, among the plurality of uplink shared channel repetitions, a number of which is not divisible by the length of the orthogonal cover code.

For example, based on that the number of the plurality of uplink shared channel repetitions is not the multiple of the length of the orthogonal cover code, a truncated orthogonal cover code that is a part of the orthogonal cover code may be applied to second uplink shared channel repetitions, among the plurality of uplink shared channel repetitions, a number of which is not divisible by the length of the orthogonal cover code.

For example, based on that the number of the plurality of uplink shared channel repetitions is not the multiple of the length of the orthogonal cover code, another orthogonal cover code that is shorter than the orthogonal cover code may be applied to second uplink shared channel repetitions, among the plurality of uplink shared channel repetitions, a number of which is not divisible by the length of the orthogonal cover code.

For example, the information related to the orthogonal cover code may be received from a base station.

For example, the information related to the orthogonal cover code may be pre-configured.

For example, whether to apply the orthogonal cover code may be configured by a base station.

For example, data related to the plurality of uplink shared channel repetitions may be repeatedly transmitted based on the length of the orthogonal cover code.

For example, the device may obtain an index per orthogonal cover code group related to the length of the orthogonal cover code.

For example, the device may obtain one orthogonal cover code index and at least one orthogonal cover code index offset for indexing at least one orthogonal cover code group related to the length of the orthogonal cover code.

For example, the orthogonal cover code index offset may be pre-configured or received from a base station.

For example, a power control operation may not be performed during an interval to which the orthogonal cover code is applied.

For example, the power control operation may not be performed to maintain power consistency in the interval to which the orthogonal cover code is applied.

The proposed method can be applied to devices based on various embodiments of the present disclosure. First, the processor 102 of the device 100 may obtain information related to an orthogonal cover code. In addition, the processor 102 of the device 100 may perform a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a device may be provided. For example, the device may include: at least one transceiver; at least one processor; and at least one memory connected to the at least one processor and storing instructions. For example, the instructions, based on being executed by the at least one processor, may cause the device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a processing device adapted to control a device may be provided. For example, the processing device may include: at least one processor; and at least one memory connected to the at least one processor and storing instructions. For example, the instructions, based on being executed by the at least one processor, may cause the device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a non-transitory computer-readable storage medium storing instructions may be provided. For example, the instructions, when executed, may cause a device to perform operations comprising: obtaining information related to an orthogonal cover code; and performing a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

FIG. 16 shows a method for a base station to perform wireless communication, based on an embodiment of the present disclosure. The embodiment of FIG. 16 may be combined with various embodiments of the present disclosure.

Referring to FIG. 16, in step S1610, the base station may transmit information related to an orthogonal cover code. In step S1620, the base station may receive a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

For example, based on that the number of the plurality of uplink shared channel repetitions is not the multiple of the length of the orthogonal cover code, at least one uplink shared channel repetition may be added such that the number of the plurality of uplink shared channel repetitions is a multiple of the length of the orthogonal cover code. For example, the orthogonal cover code may be applied to the plurality of uplink shared channel repetitions including the at least one uplink shared channel repetition.

For example, based on that the number of the plurality of uplink shared channel repetitions is not the multiple of the length of the orthogonal cover code, transmission of second uplink shared channel repetitions, among the plurality of uplink shared channel repetitions, a number of which is not divisible by the length of the orthogonal cover code, may be dropped.

For example, based on that the number of the plurality of uplink shared channel repetitions is not the multiple of the length of the orthogonal cover code, the orthogonal cover code may not be applied to second uplink shared channel repetitions, among the plurality of uplink shared channel repetitions, a number of which is not divisible by the length of the orthogonal cover code.

For example, based on that the number of the plurality of uplink shared channel repetitions is not the multiple of the length of the orthogonal cover code, a truncated orthogonal cover code that is a part of the orthogonal cover code may be applied to second uplink shared channel repetitions, among the plurality of uplink shared channel repetitions, a number of which is not divisible by the length of the orthogonal cover code.

For example, based on that the number of the plurality of uplink shared channel repetitions is not the multiple of the length of the orthogonal cover code, another orthogonal cover code that is shorter than the orthogonal cover code may be applied to second uplink shared channel repetitions, among the plurality of uplink shared channel repetitions, a number of which is not divisible by the length of the orthogonal cover code.

For example, the information related to the orthogonal cover code may be received from a base station.

For example, the information related to the orthogonal cover code may be pre-configured.

For example, whether to apply the orthogonal cover code may be configured by a base station.

For example, data related to the plurality of uplink shared channel repetitions may be repeatedly transmitted based on the length of the orthogonal cover code.

For example, the device may obtain an index per orthogonal cover code group related to the length of the orthogonal cover code.

For example, the device may obtain one orthogonal cover code index and at least one orthogonal cover code index offset for indexing at least one orthogonal cover code group related to the length of the orthogonal cover code.

For example, the orthogonal cover code index offset may be pre-configured or received from a base station.

For example, a power control operation may not be performed during an interval to which the orthogonal cover code is applied.

For example, the power control operation may not be performed to maintain power consistency in the interval to which the orthogonal cover code is applied.

The proposed method can be applied to devices based on various embodiments of the present disclosure. First, the processor 202 of the base station 200 may control the transceiver 206 to transmit information related to an orthogonal cover code. In addition, the processor 202 of the base station 200 may control the transceiver 206 to receive a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a base station may be provided. For example, the base station may include: at least one transceiver; at least one processor; and at least one memory connected to the at least one processor and storing instructions. For example, the instructions, based on being executed by the at least one processor, may cause the base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a processing device adapted to control a base station may be provided. For example, the processing device may include: at least one processor; and at least one memory connected to the at least one processor and storing instructions. For example, the instructions, based on being executed by the at least one processor, may cause the base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Based on an embodiment of the present disclosure, a non-transitory computer-readable storage medium storing instructions may be provided. For example, the instructions, when executed, may cause a base station to perform operations comprising: transmitting information related to an orthogonal cover code; and receiving a plurality of uplink shared channel repetitions based on the orthogonal cover code. For example, based on that a number of the plurality of uplink shared channel repetitions is not a multiple of a length of the orthogonal cover code, the orthogonal cover code may be applied to first uplink shared channel repetitions, among the plurality of uplink shared channel repetitions, a number of which is divisible by the length of the orthogonal cover code.

Various embodiments of the present disclosure may be combined with each other.

The proposed method may be applied to an apparatus described below. First, a processor 202 of a receiving UE may configure at least one bandwidth part (BWP). Then, the processor 202 of the receiving UE may control a transceiver 206 of the receiving UE to receive, from a transmitting UE, a physical channel related to inter-UE communication (e.g., SL communication) and/or a reference signal related to inter-UE communication (e.g., SL communication) on the at least one BWP.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

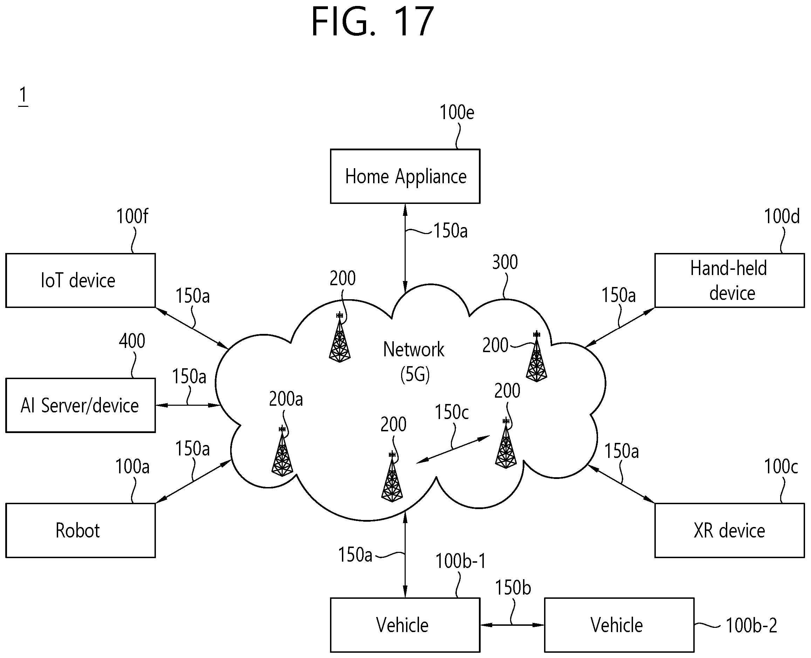

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

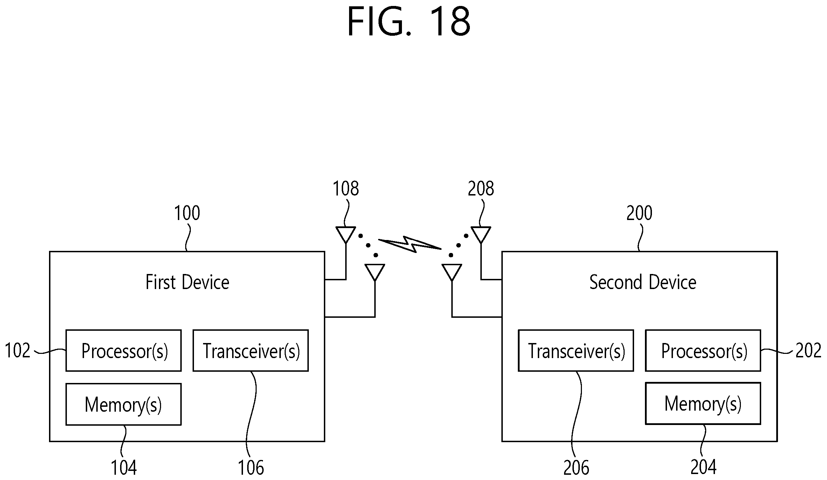

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

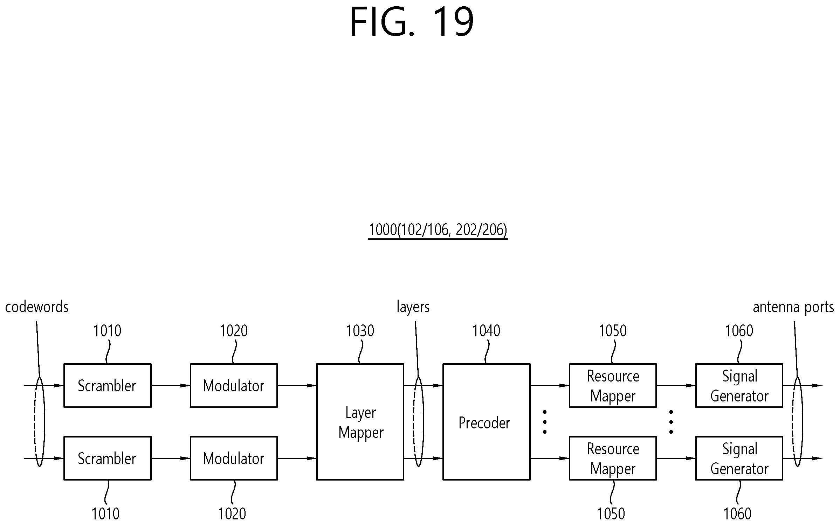

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

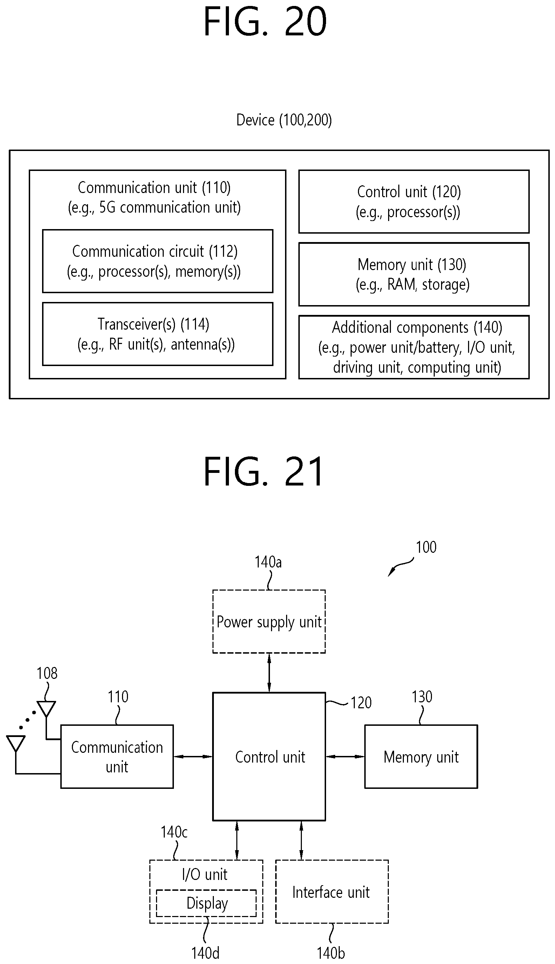

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

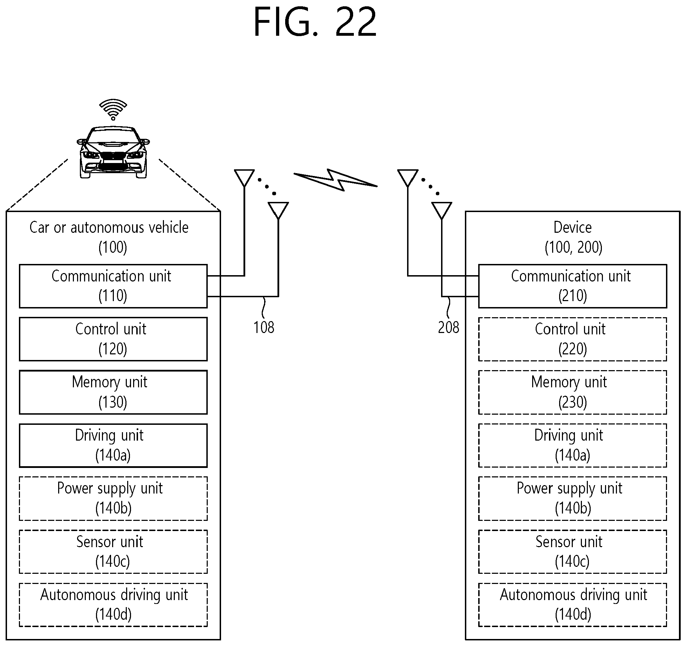

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining information related to an orthogonal cover code; and
performing a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

2. The method of claim 1,
wherein, based on that the number of the plurality of uplink shared channel repetitions is not the multiple of the length of the orthogonal cover code, at least one uplink shared channel repetition is added such that the number of the plurality of uplink shared channel repetitions is a multiple of the length of the orthogonal cover code, and
wherein the orthogonal cover code is applied to the plurality of uplink shared channel repetitions including the at least one uplink shared channel repetition.

3. The method of claim 1,
wherein, based on that the number of the plurality of uplink shared channel repetitions is not the multiple of the length of the orthogonal cover code, transmission of second uplink shared channel repetitions, among the plurality of uplink shared channel repetitions, a number of which is not divisible by the length of the orthogonal cover code, is dropped.

4. The method of claim 1,
wherein, based on that the number of the plurality of uplink shared channel repetitions is not the multiple of the length of the orthogonal cover code, the orthogonal cover code is not applied to second uplink shared channel repetitions, among the plurality of uplink shared channel repetitions, a number of which is not divisible by the length of the orthogonal cover code.

5. The method of claim 1,
wherein, based on that the number of the plurality of uplink shared channel repetitions is not the multiple of the length of the orthogonal cover code, a truncated orthogonal cover code that is a part of the orthogonal cover code is applied to second uplink shared channel repetitions, among the plurality of uplink shared channel repetitions, a number of which is not divisible by the length of the orthogonal cover code.

6. The method of claim 1,
wherein, based on that the number of the plurality of uplink shared channel repetitions is not the multiple of the length of the orthogonal cover code, another orthogonal cover code that is shorter than the orthogonal cover code is applied to second uplink shared channel repetitions, among the plurality of uplink shared channel repetitions, a number of which is not divisible by the length of the orthogonal cover code.

7. The method of claim 1,
wherein the information related to the orthogonal cover code is received from a base station.

8. The method of claim 1,
wherein the information related to the orthogonal cover code is pre-configured.

9. The method of claim 1,
wherein whether to apply the orthogonal cover code is configured by a base station.

10. The method of claim 1,
wherein data related to the plurality of uplink shared channel repetitions is repeatedly transmitted based on the length of the orthogonal cover code.

11. The method of claim 1, further comprising:
obtaining an index per orthogonal cover code group related to the length of the orthogonal cover code.

12. The method of claim 1, further comprising:
obtaining one orthogonal cover code index and at least one orthogonal cover code index offset for indexing at least one orthogonal cover code group related to the length of the orthogonal cover code.

13. The method of claim 12,
wherein the orthogonal cover code index offset is pre-configured or received from a base station.

14. The method of claim 1,
wherein a power control operation is not performed during an interval to which the orthogonal cover code is applied.

15. The method of claim 14,
wherein the power control operation is not performed to maintain power consistency in the interval to which the orthogonal cover code is applied.

16. A device, comprising:
at least one transceiver;
at least one processor; and
at least one memory connected to the at least one processor and storing instructions that, based on being executed by the at least one processor, cause the device to perform operations comprising:
obtaining information related to an orthogonal cover code; and
performing a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

17. A processing device adapted to control a device, the processing device comprising:
at least one processor; and
at least one memory connected to the at least one processor and storing instructions that, based on being executed by the at least one processor, cause the device to perform operations comprising:
obtaining information related to an orthogonal cover code; and
performing a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

18. A non-transitory computer-readable storage medium storing instructions that, based on being executed, cause a device to perform operations comprising:
obtaining information related to an orthogonal cover code; and
performing a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

19. A method, comprising:
transmitting information related to an orthogonal cover code; and
receiving a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

20. A base station, comprising:
at least one transceiver;
at least one processor; and
at least one memory connected to the at least one processor and storing instructions that, based on being executed by the at least one processor, cause the base station to perform operations comprising:
transmitting information related to an orthogonal cover code; and
receiving a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

21. A processing device adapted to control a base station, the processing device comprising:
at least one processor; and
at least one memory connected to the at least one processor and storing instructions that, based on being executed by the at least one processor, cause the base station to perform operations comprising:
transmitting information related to an orthogonal cover code; and
receiving a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.

22. A non-transitory computer-readable storage medium storing instructions that, based on being executed, cause a base station to perform operations comprising:
transmitting information related to an orthogonal cover code; and
receiving a plurality of uplink shared channel repetitions based on the orthogonal cover code,
wherein, based on that a number of the plurality of uplink shared channel repetitions is not a multiple of a length of the orthogonal cover code, the orthogonal cover code is applied to first uplink shared channel repetitions, among the plurality of uplink shared channel repetitions, a number of which is divisible by the length of the orthogonal cover code.
